# EUROPEAN PATENT APPLICATION

(11) **EP 4 723 776 A1**
(43) Date of publication of application: **08.04.2026**
(21) Application number: 23938891.1
(22) Date of filing: 31.05.2023
(51) Int. Cl.: H04W 72/20

(54) **INFORMATION TRANSMISSION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Grassi, Stefano
(86) International application number: PCT/CN2023/097594
(87) International publication number: WO 2024/243900

(57) **Abstract**

The present application relates to an information transmission method, a first device, a second device, a chip, a computer readable storage medium, a computer program product, a computer program, and a communication system. The method comprises: a first device sends first information, wherein the first information is used for indicating N device identifiers, so that a second device receiving the first information sends request information for a channel resource when the N device identifiers include a device identifier of the second device, and N is an integer greater than or equal to 2. According to the present application, centralized polling of a plurality of devices can be realized, so that channel resources can be allocated according to the requirements of the devices, and the transmission requirements of a large number of devices are met.

## Description

### TECHNICAL FIELD

The present disclosure relates to the field of communications, and in particular, to a method for information transmission, a first device, a second device, a chip, a computer readable storage medium, a computer program product, a computer program, and a communication system.

### BACKGROUND

In communication systems, large-scale deployment and maintenance-free of Internet of Things (IoT) devices are supported by the battery-free and low cost of the zero-power terminal. The zero-power terminal can be used in scenarios such as logistics management, environmental monitoring, intelligent control and etc. In some scenarios, a large number of zero-power terminals will be deployed in an area. It is necessary to consider how to allocate channel resources to meet the transmission requirements of a large number of devices.

### SUMMARY

The embodiments of the present disclosure provide a method for information transmission. The method includes the following operation.

The first device sends the first information. The first information is used to indicate N device identifiers, so that the second device that receives the first information sends request information for a channel resource in a case that the N device identifiers include a device identifier of the second device. N is an integer greater than or equal to 2.

The embodiments of the present disclosure provide a method for information transmission. The method includes the following operations.

The second device receives the first information sent by the first device. The first information is used to indicate N device identifiers.

In a case that the N device identifiers include a device identifier of the second device, the second device sends request information for a channel resource. N is an integer greater than or equal to 2.

The embodiments of the present disclosure provide the first device. The first device includes the first communication module.

The first communication module is configured to send the first information. The first information is used to indicate N device identifiers, so that the second device that receives the first information sends request information for a channel resource in a case that the N device identifiers include a device identifier of the second device, and N is an integer greater than or equal to 2.

The embodiments of the present disclosure provide the second device. The second device includes the second communication module.

The second communication module is configured to receive the first information sent by the first device. The first information is used to indicate N device identifiers.

The second communication module is further configured to send request information for a channel resource in a case that the N device identifiers include a device identifier of the second device. N is an integer greater than or equal to 2.

The embodiments of the present disclosure provide the first device. The first device includes a processor and a memory. The memory is configured to store a computer program, and the processor is configured to invoke and execute the computer program stored in the memory to cause the first device to perform the above-described method for information transmission.

The embodiments of the present disclosure provide the second device. The second device includes a processor and a memory. The memory is configured to store a computer program, and the processor is configured to invoke and execute the computer program stored in the memory to cause the second device to perform the above-described method for information transmission.

The embodiments of the present disclosure provide a chip. The chip is configured to implement the above-described method for information transmission.

Specifically, the chip includes a processor for invoking and executing a computer program from a memory to cause a device on which the chip is mounted to perform the above-described method for information transmission.

The embodiments of the present disclosure provide a computer readable storage medium. The computer readable storage medium is used for storing a computer program that causes the device to perform the above-described method for information transmission when the computer program is executed by the device.

The embodiments of the present disclosure provide a computer program product. The computer program product includes computer program instructions that cause a computer to execute the above-described method for information transmission.

The embodiments of the present disclosure provide a computer program that, when run on a computer, causes the computer to execute the above-described method for information transmission.

In the embodiments of the present disclosure, the first device sends the first information indicating multiple device identifiers, so that the device corresponding to each device identifier sends request information for a channel resource after receiving the first information. In this way, multiple device identifiers are indicated by specific information, so centralized polling of the channel resource requests of the multiple devices by the first device is realized, which is beneficial for allocating channel resources according to the requirement of each device and meeting the transmission requirements of a large number of devices.

### BRIEF DESCRIPTION OF THE DRAWINGS

FIG. 1 is a schematic diagram of an application scenario according to an embodiment of the present disclosure.
FIG. 2 is a schematic flowchart of a method for information transmission according to an embodiment of the present disclosure.
FIG. 3 is a schematic flowchart of a method for information transmission according to another embodiment of the present disclosure.
FIG. 4 is a schematic diagram of the first information according to an embodiment of the present disclosure.
FIG. 5 is a schematic diagram of a polling window in an application example.
FIG. 6 is a schematic diagram of multiple polling frames in an application example.
FIG. 7 is a schematic diagram of resource allocation through a polling frame in an application example.
FIG. 8 is a schematic diagram of a polling frame in an application example.
FIG. 9 is a schematic diagram of grant slicing according to an embodiment of the present disclosure.
FIG. 10 is a diagram of an application of a TXOP in an application example.
FIG. 11 is a schematic block diagram of the first device according to an embodiment of the present disclosure.
FIG. 12 is a schematic block diagram of the first device according to another embodiment of the present disclosure.
FIG. 13 is a schematic block diagram of the first device according to yet another embodiment of the present disclosure.
FIG. 14 is a schematic block diagram of the first device according to yet another embodiment of the present disclosure.
FIG. 15 is a schematic block diagram of the first device according to yet another embodiment of the present disclosure.
FIG. 16 is a schematic block diagram of the second device according to an embodiment of the present disclosure.
FIG. 17 is a schematic block diagram of the second device according to another embodiment of the present disclosure.
FIG. 18 is a schematic block diagram of a communication device according to an embodiment of the present disclosure.
FIG. 19 is a schematic block diagram of a chip according to an embodiment of the present disclosure.
FIG. 20 is a schematic block diagram of a communication system according to an embodiment of the present disclosure.

### DETAILED DESCRIPTION

Hereinafter, the technical solutions in the embodiments of the present disclosure will be described with reference to the drawings in the embodiments of the present disclosure.

The technical solutions in the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Non-Terrestrial Networks (NTN) system, a Universal Mobile Telecommunication System (UMTS), 5th-Generation (5G) system, a Wireless Local Area Networks (WLAN), a Wireless Fidelity (WiFi) system, or other communication systems.

Generally speaking, the conventional communication system supports a limited number of connections and is easy to implement, however, with the development of communication technology, the mobile communication system will support not only conventional communication, but also terminal-to-terminal direct communication such as, for example, Device to Device (D2D) communication, Machine to Machine (M2M) communication, Machine Type Communication (MTC), Vehicle to Vehicle (V2V) communication, or Vehicle to everything (V2X) communication, and the like, and the embodiments of the present disclosure may also be applied to these communication systems.

In an embodiment, the communication system in the embodiments of the present disclosure may be applied to a Carrier Aggregation (CA) scenario, a Dual Connectivity (DC) scenario, or a Standalone (SA) network layout scenario.

In an embodiment, the communication system in the embodiments of the present disclosure may be applied to an unlicensed spectrum, and the unlicensed spectrum may also be considered as a shared spectrum. Alternatively, the communication system in the embodiments of the present disclosure may be applied to a licensed spectrum, and the licensed spectrum may also be considered as a non-shared spectrum.

The present disclosure describes various embodiments for interaction between devices. The interaction between devices in the embodiments of the present disclosure may include interaction between a network device and a terminal device, or may include interaction between different terminal devices. Here, the network device may be an Access Point (AP) in WLAN, a Base Transceiver Station (BTS) in GSM or CDMA, a NodeB (NB) in WCDMA, an Evolutional Node B (eNB or eNodeB) in LTE, a relay station, an AP, an in-vehicle device, a wearable device, a network device (gNB) in an NR network, a network device in a future evolved Public Land Mobile Network (PLMN) network, or a network device in an NTN network, or the like.

The terminal device may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, or the like. The terminal device may be a STATION (ST) in a WLAN, a cellular telephone, a cordless telephone, a Session Initiation Protocol (SIP) telephone, a Wireless Local Loop (WLL) station, a Personal Digital Assistant (PDA) device, a handheld device having wireless communication capabilities, a computing device or other processing device connected to a wireless modem, an in-vehicle device, a wearable device, a terminal device in a next generation communication system such as an NR network, or a terminal device in a future evolved PLMN network, or the like.

In the embodiments of the present disclosure, the terminal device may be deployed on land, including indoor or outdoor, handheld, wearable, or vehicle-mounted device. It may also be deployed on the water surface (such as ships, etc.) or under the water surface (such as submarines, etc.). It may also be deployed in the air (such as, on aircraft, balloons and satellites, etc.).

In the embodiments of the present disclosure, the terminal device may be a Mobile Phone, a tablet (Pad), a computer with a wireless transceiver function, a Virtual Reality (VR) terminal device, an Augmented Reality (AR) terminal device, a terminal device in personal internet of things (PIoT), a wireless terminal device in an industrial control, a wireless terminal device in a self driving, a wireless terminal device in a remote medical, a wireless terminal device in a smart grid, a wireless terminal device in a transportation safety, a wireless terminal device in a smart city, a wireless terminal device in a smart home, or the like.

As an example and not limitation, in the embodiments of the present disclosure, the terminal device may also be a wearable device. The wearable device may also be referred to as a wearable smart device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have features of full functions, large size and realizing complete or partial functions without relying on smart phones, such as a smart watch or smart glasses, and only focus on a certain type of application functions and need to be used in cooperation with other devices such as smart phones, for example, various smart bracelets, smart jewelries, etc. which may detect physical signs.

In some embodiments, the network device may provide services to the cell, and the terminal device communicates with the network device through transmission resources (for example, frequency domain resources, or spectrum resources) used by the cell. The cell may be a cell corresponding to the network device (for example, base station). The cell may belong to a macro base station or a base station corresponding to a Small cell. The Small cell here may include a Metro cell, a Micro cell, a Pico cell, a Femto cell, etc. These small cells have the characteristics of small coverage and low transmission power, and are suitable for providing high-speed data transmission services.

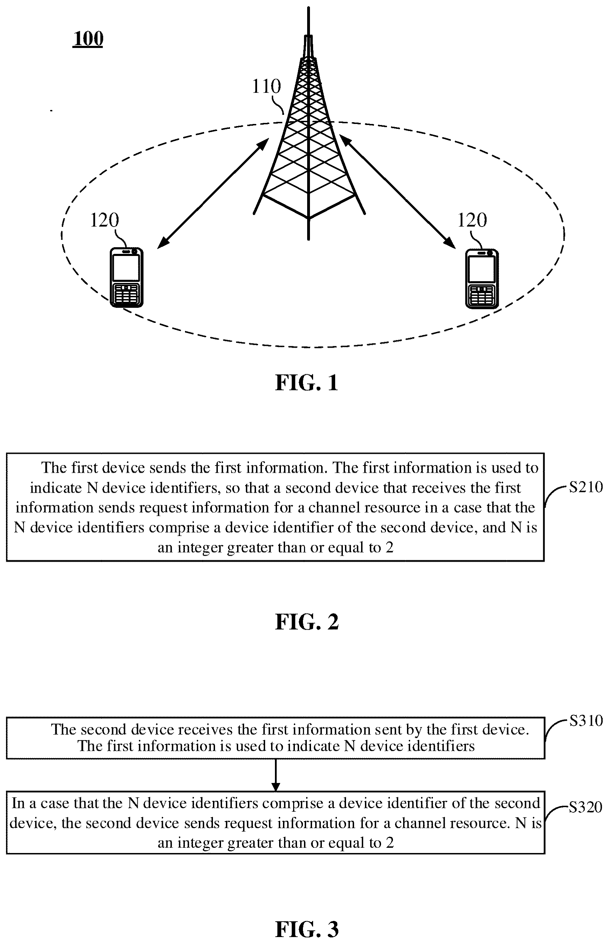

FIG. 1 exemplarily illustrates a communication system 100. The communication system includes one first device 110 and two second devices 120. In one possible implementation, the communication system 100 may include multiple first devices 110, and another number of second devices 120 may be included within the coverage range of each first device 110, which is not limited in the embodiment of the present disclosure. The first device 110 may be a network device (for example, a base station in a mobile communication system or an access point in a WiFi system, and the base station is exemplified in FIG. 1, but is not limited thereto), or may be a terminal device (for example, a station in a WiFi system). The second device 120 may be a terminal device associated with the first device, such as a zero-power terminal.

It should be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, which will not be described herein. The communication device may also include other devices in the communication system, such as other network entities such as a network controller and a mobility management entity, which is not limited in the embodiments of the present disclosure.

In order to facilitate understanding of the embodiments of the present disclosure, basic procedures and basic concepts related to the embodiments of the present disclosure will be briefly described below. It should be understood that the basic procedures and basic concepts described below do not limit the embodiments of the present disclosure.

It should be understood that the terms "system" and "network" are often used interchangeably herein. Herein, the term "and/or" is used only for describing an association relationship between association objects, and means that there may be three relationships, for example, A and/or B, which may mean that A exists alone, A and B exist simultaneously, and B exists alone. In addition, the character "/" in the present disclosure generally indicates that there is an "or" relationship between the association objects.

It should be understood that the "indication" mentioned in the embodiments of the present disclosure may be a direct indication, an indirect indication, or an association relationship. For example, A indicates B, which may mean that A indicates B directly, for example, B may be acquired by A. It may also mean that A indicates B indirectly, for example A indicates C, and B may be acquired through C. It may also indicate that there is an association relationship between A and B.

In the description of the embodiments of the present disclosure, the term "corresponding" may indicate that there is a direct correspondence or indirect correspondence relationship between the two objects, may indicate that there is an association relationship between the two objects, or may indicate a relationship between indicating and being instructed, configuring and being configured, or the like.

In order to facilitate understanding of the technical solutions of the embodiments of the present disclosure, the related technologies of the embodiments of the present disclosure will be described below. The related technologies below, as option solutions, may be arbitrarily combined with the technical solutions of the embodiments of the present disclosure, and all of them belong to the scope of protection of the embodiments of the present disclosure.

### (1) Cellular passive Internet of Things

With the increase of 5G industry applications, there are more and more types and application scenarios of connected objects, and there will also be higher requirements for the price and power consumption of communication terminals. The application of battery-free and low-cost passive IoT devices has become the key technology of cellular IoT, which enriches the types and quantities of 5G network link terminals, and truly realize the Internet of Everything. The passive IoT devices may be based on existing zero-power technologies, such as Radio Frequency Identification (RFID) technology, and extended on this basis to be suitable for cellular IoT.

### (2) Zero-power terminal

Based on the power source and usage manner of the zero-power terminal, the zero-power terminal may be classified into the following types: passive zero-power terminal, semi-passive zero-power terminal and active zero-power terminal.

### 1) Passive zero-power terminal

The zero-power terminal does not need a built-in battery. When the zero-power terminal is close to the network device (such as the reader/writer of the RFID system), the zero-power terminal is in the near-field range formed by the antenna radiation of the network device. Therefore, the antenna of the zero-power terminal generates an induced current through electromagnetic induction, and the induced current drives the low-power chip circuit of the zero-power terminal, so as to realize works such as the demodulation of forward link signals, the modulation of backward link signals, and etc. For the backscattering link, the zero-power terminal uses the backscattering implementation for signal transmission.

It may be seen that the passive zero-power terminal does not need a built-in battery to drive neither the forward link nor the backward link, and is a true zero-power terminal.

The passive zero-power terminal does not require a battery, and RF circuits and baseband circuits are very simple. For example, Low Noise Amplifier (LNA), Power Amplifier (PA), crystal oscillator, Analog-to-Digital Converter (ADC) and other devices are not required, so they have many advantages such as small size, light weight, very cheap price, long service life, and etc.

### 2) Semi-passive zero-power terminal

The semi-passive zero-power terminal itself is not equipped with a conventional battery, but it may use a power harvesting module to harvest ambient power, such as wireless radio frequency signal power, and store the harvested power in a power storage unit (such as a capacitor). After the power storage unit obtains power, it can drive the low-power chip circuit of the zero-power terminal, so as to realize the demodulation of forward link signals and the modulation of backward link signals. For the backscattering link, the zero-power terminal may use the backscattering manner or the active transmission manner to realize signal transmission.

It may be seen that the semi-passive zero-power terminal does not need a built-in battery to drive neither the forward link nor the backward link. Although the power stored by the capacitor is used in operation, the power comes from the ambient power harvested by the power harvesting module, so it is also a true zero-power terminal.

The semi-passive zero-power terminal inherits many advantages of passive zero-power terminal, so it has many advantages such as small size, light weight, very cheap price and long service life.

### 3) Active zero-power terminal

The zero-power terminal used in some scenarios may also be an active zero-power terminal, and such terminals may have built-in batteries. The battery is used to drive the low-power chip circuit of the zero-power terminal to realize the demodulation of forward link signals and the modulation of backward link signals. However, for the backscattering link, the zero-power terminal uses backscattering manner or active transmission manner to realize signal transmission. Despite the built-in battery, such active zero-power terminals have extremely low power consumption and complexity, so they can have a smaller capacity battery, thus achieving smaller cost and size. The built-in battery may also be used as a power storage unit for the power harvesting module to store the harvested ambient power, thereby achieving a longer maintenance period or even maintenance-free.

The active zero-power terminal has a built-in battery for power supply, so as to increase the communication distance of the zero-power terminal and improve the reliability of communication. Therefore, it may be applied in some scenarios that require relatively high communication distance, read delay, etc.

### (3) Device based on ambient power

In the NR system and WiFi system, low-cost and large-scale deployment and maintenance-free of the IoT devices may be supported by battery-free and low cost of devices. How to support IoT devices based on ambient power in the NR system and WiFi system is a current research direction. An IoT device based on ambient power may also be called an Ambient IoT (A-IoT) device or an Ambient Powered IoT (AMP IoT) device. The power required for its operation comes from harvesting of the ambient power, and the source of the ambient power may be wireless signals, solar power, thermal power, etc. Such devices are similar to passive or semi-passive devices in zero-power communication.

A research project on Ambient IoT devices was carried out in the Radio Access Network (RAN) of 3GPP. The Ambient IoT devices are roughly classified into the following three types: device A, device B and device C, and each type of device has corresponding complexity and communication capabilities.

Device A does not have power storage capabilities and cannot send independent signals, that is, it adopts backscattering transmission manner.

Device B has power storage capabilities and cannot send independent signals, that is, it adopts backscattering transmission manner and can use the stored power to amplify the backscattering signal.

Device C has power storage capabilities and can send independent signals, that is, it has active transmission capabilities.

The device A has the lowest complexity and power consumption, and the power consumption of which may be as low as 1µW (microwatt), but its communication distance is limited, generally only a few meters. The device A requires the network device to provide carrier signals for backscattering transmission. The device C generally has a large-capacity capacitor to store the ambient power, the power consumption of which may be several hundred µW, and can support active signal transmission, and has a large communication distance. Because the device C can perform active transmission, it does not require the network device to provide the carrier signals. The complexity and power consumption of the device B are between the device A and the device C.

In addition, ambient energy harvesting supported by the zero-power terminal may also have many types, such as wireless radio frequency, solar power, thermal power, mechanical power and other power. The zero-power terminal based on wireless radio frequency energy harvesting may require the network to provide wireless radio frequency power supply signals.

The ambient IoT may be used in at least the following four types of scenarios:
object recognition, such as logistics, production line product management, supply chain management;
environmental monitoring, such as temperature, humidity and harmful gas monitoring of working environment and natural environment;
positioning, such as indoor positioning, intelligent object search, production line product positioning, etc.; and
intelligent control, such as intelligent control of various electrical appliances in smart homes (turning on and off air conditioners, adjusting temperature), and intelligent control of various facilities in agricultural greenhouses (automatic watering, fertilization).

### (4) Channel access mechanism

In the 802.11 protocol, the basic channel access protocol is Distributed Coordination Function (DCF), which enables different compatible STA devices to share usage channels throughs Carrier Sense Multiple Access with Collision Avoidance (CSMA/CA) mechanism, so that the probability of collision is reduced. In the channel access procedure, whether the channel is idle is determined through the carrier sense mechanism.

The carrier sense mechanism is classified into physical carrier sense and virtual carrier sense. If the result of any one sense indicates that the channel is busy, the channel is busy.

The physical carrier sense uses three methods for detecting whether channel is idle, namely power detection, carrier detection and mixed detection of power detection and carrier detection, which are collectively referred to as Clear Channel Assessment (CCA). The power detection is to judge the power of the received signal. When the received power is greater than the threshold ED _ threshold specified by the physical layer, it is considered that the channel is occupied. The carrier detection is to detect the preamble portion of the signal in the channel, and determine whether the channel is occupied according to the detection result.

The virtual carrier sense mechanism is provided by Medium Access Control (MAC), and the 802.11 standard uses Network Allocation Vector (NAV) to implement virtual sense. The "duration" is stored in the Dur/ID field in the MAC frame. For the STA that receives the information, the time for which the channel will be occupied is determined, and the time for which the transmission needs to be delayed is determined. The NAV is a Timer, which defines how long the current channel needs to be occupied. The starting value of this timer is the duration of the last received frame, and the countdown to 0 indicates end. Each monitoring STA uses the NAV timer. When data communication is performed, the STA occupying the channel will inform other STAs of how long it will take through the duration field in the frame, while the STA that does not acquiring the channel will update the value of its own NAV by comparing the duration value in the received packet. The current channel is considered to be idle only when the value of the NAV is 0 and the physical carrier sense indicates that the channel is idle.

Request To Send/Clear To Send (RTS/CTS) protocol is a mechanism adopted by 802.11 protocol to reduce collisions caused by hidden node problems. The basic idea of the RTS/CTS mechanism is to reserve the channel through a short control packet. If the sending station wants to send a message to the receiving station, it first needs to send an RTS control frame. After the stations around the sending station receive this RTS, they set their own values of the NAVs according to the duration field. After receiving the RTS, the receiving station replies with a CTS control frame. After the stations around the receiving station receive the CTS, they set their own values of the NAVs according to the duration field. Stations whose values of NAVs are not 0 cannot perform idle monitoring for the channel, thereby avoiding collisions with transmissions between the sending station and the receiving station.

In IoT application scenarios, such as logistics and warehousing, a large number of goods need to be transferred, stored, loaded, unloaded and taken inventory at logistics stations or warehouses. With the occurrence of warehouse ordering, goods warehousing, goods management and goods outbound, Ambient IoT needs to communicate with the network centrally and frequently, such as reporting goods information, positioning information and the like stored by Ambient IoT devices. When unlicensed spectrum is used, Ambient IoT devices need to obtain channel access for transmission. The concentrated uplink transmission of a large number of Ambient IoT devices in a short period of time will cause channel access collisions. One way to solve this problem is to configure a larger resource pool. Ambient IoT devices select resources for transmission according to certain rules, but this does not prevent multiple Ambient IoT devices from selecting the same resource to cause collisions. When a collision occurs, multiple retransmissions are adopted, and the data can be correctly received until there is no collision. This method causes waste of channel resources.

On the other hand, in environmental monitoring scenarios, a large number of Ambient IoT devices in an area need to monitor the environment in real time and upload monitoring data. Whether there is data that needs to be uploaded from the Ambient IoT devices is unknown to the network. If the Ambient IoT device is allowed to access by itself, the Ambient IoT device needs to support a certain channel access mechanism, and certain collisions will occur. If the network device is allowed to provide channel access to the Ambient IoT devices, blindly allocating channel transmission opportunities before knowing whether there is data that needs to be uploaded from the Ambient IoT devices will cause waste of channel resources. Therefore, how to meet the uplink transmission of a large number of Ambient IoT devices while avoiding the waste of channel resources is also a problem that needs to be solved.

FIG. 2 is a schematic flowchart of a method for information transmission according to an embodiment of the present disclosure. This method may be applied to the system illustrated in FIG. 1, but is not limited thereto. The method includes the following operation.

In operation S210, the first device sends the first information. The first information is used to indicate N device identifiers, so that the second device that receives the first information sends request information for a channel resource in a case that the N device identifiers include a device identifier of the second device. N is an integer greater than or equal to 2.

Corresponding to the above method, FIG. 3 is a schematic flowchart of a method for information transmission according to another embodiment of the present disclosure. This method may also be applied to the system illustrated in FIG. 1, but is not limited thereto. The method includes the following operations.

In operation S310, the second device receives the first information sent by the first device. The first information is used to indicate N device identifiers (IDs).

In operation S320, in a case that the N device identifiers include a device identifier of the second device, the second device sends request information for a channel resource. N is an integer greater than or equal to 2.

The first device may be a network device, such as an access network device in a cellular network or an access point (AP) in a WiFi system. The first device may also be a terminal device, such as a station (STA) in a WiFi system. The second device may be a terminal device associated with the first device, such as a zero-power terminal.

In some embodiments, the first device may be associated with one or more devices. It may be understood that the first device may send the first information to one or more devices associated with the first device, or broadcast the first information. Any one device that receives the first information, for example, the second device, needs to consider sending the indication information for the channel resource in a case that the N device identifiers indicated by the first information include its own device identifier. Alternatively, the second device may send the indication information for the channel resource or not according to its own requirement.

In some embodiments, the first information may include N pieces of identifier indication information, and each piece of identifier indication information indicates one device identifier.

In some embodiments, the device identifier may be an Association Identifier (AID) or a group AID. The AID is an ID allocated by the first device to the second device when the second device is associated with the first device. The group AID corresponds to the AID(s) of one or more devices of a device group.

For example, the first information may indicate two AIDs, which are 0 and 1, respectively, and then the device having an AID of 0 and the device having an AID of 1 may send the request information.

For another example, the first information may indicate two group AIDs, which are 1 and 2, respectively, and the various devices in the device group having the group AID of 1 and the various devices in the device group having the group AID of 2 may send the request information.

According to the above method, multiple device identifiers are indicated by specific information, so centralized polling of the channel resource requests of the multiple devices by the first device is realized, which is beneficial for allocating channel resources according to the requirement of each device and meeting the transmission requirements of a large number of devices. In addition, waste of resources caused by blindly allocating channel resources by the first device to other devices is avoided. For example, in the application scenarios of zero-power terminals in environmental monitoring such as temperature monitoring or fire alarm, the zero-power terminal needs to report monitoring data only when an abnormality occurs. Through centralized polling, the requirements of various zero-power terminals can be obtained in batches. The channel resources are allocated according to the requirements to avoid waste of resources.

In some embodiments, the first device is an access network device in a cellular network, and the second device is a zero-power terminal within a coverage range of the access network device.

In some embodiments, the first device is an AP or STA, and the second device is a zero-power terminal associated with the first device. Alternatively, in a case that the first device is an AP or an STA, the first device may share the channel obtained by the first device with a zero-power terminal associated with the first device.

Exemplarily, the above zero-power terminal may include a device based on ambient power, such as an AMP IoT device, which may be used as a communication device in a WiFi or cellular network. The ambient power may include wireless radio frequency power, solar power, thermal power, mechanical power, and the like. From the perspective of power harvesting, the zero-power terminal may also be an energy harvesting device. The power supply device is a device that sends a power supply signal. Alternatively, the power supply device of the zero-power terminal may be the first device associated with the zero-power terminal, such as an access network device, an AP, or the like, or may be a separate power supply device.

In some embodiments, the channel resource may be transmission opportunity(s) (TXOP(s)) obtained by the first device through channel access.

Exemplarily, the second device is a zero-power terminal, and the zero-power terminal has a requirement of low complexity due to the limitation of its power consumption. For example, the receiver only supports simple modulation and demodulation methods, such as supporting Amplitude Shift Keying (ASK) and Frequency-shift keying (FSK), but does not support Orthogonal Frequency Division Multiplexing (OFDM). Based on this, it is difficult for the zero-power terminal to perform CCA and support CSMA/CA mechanism. In the embodiments of the present disclosure, taking a WiFi system as an example, channel access is performed by the first device such as an AP or a STA that is compatible with CSMA/CA mechanism, and the obtained TXOP is shared with a zero-power terminal for uplink transmission or sidelink transmission, so that the zero-power terminal may not be required to perform channel access.

In some embodiments, the first information includes K pieces of identifier indication information respectively corresponding to K device identifiers, and the K pieces of identifier indication information are used to indicate the N device identifiers among the K device identifiers, and K is an integer greater than or equal to N.

Exemplarily, each of the K pieces of identifier indication information may be used to indicate whether the corresponding device identifier is one of the N device identifiers, that is, indicate whether the corresponding device identifier is an identifier of a device that is polled. For example, the first device is associated with 24 devices, which correspond to 24 device identifiers. The first device needs to poll 20 of the 24 devices (indicate that 20 devices send request information for channel resources), that is, the first information needs to indicate 20 device identifiers. In order to indicate 20 device identifiers, the first information may carry 24 pieces of identifier indication information corresponding to the 24 device identifiers one-to-one, and each piece of identifier indication information is used to indicate whether the corresponding device identifier is an identifier of a device that is polled. In this way, the second device that receives the first information may determine the 20 device identifiers indicated by the first information from the 24 device identifiers according to the 24 pieces of identifier indication information.

In some embodiments, the first information includes the first bitmap, and the K pieces of identifier indication information are K bits in the first bitmap. The N device identifiers include device identifiers corresponding to bits whose values are the first value among the K bits. Here, the bitmap may also be referred to as a bit graph, a bitstream, or the like.

Exemplarily, the first value is a predetermined numerical value, such as 0 or 1. It may be understood that the bit whose value is the first value represents that the corresponding device identifier is the identifier of the device that is polled. A bit whose value is not the first value, for example, a bit whose value is the third value represents that the corresponding device identifier is an identifier of a device that is not polled, and the third value is different from the first value. For example, if the first value is 1, the third value is 0 and if the first value is 0, the third value is 1.

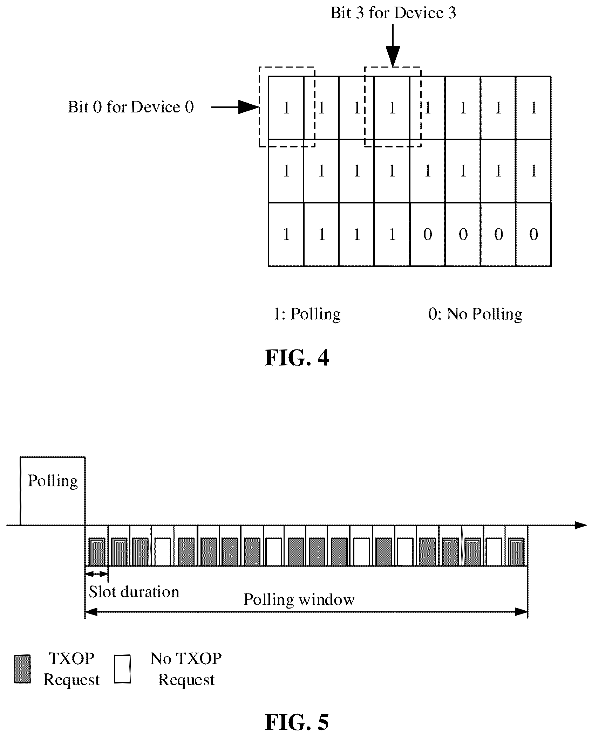

FIG. 4 illustrates a schematic diagram of the first information according to an embodiment of the present disclosure. K = 24 and the first value being 1 are taken as an example. As illustrated in FIG. 4, the first information includes a bitmap having 24 bits (including bits 0 to 23). Each bit is one piece of identifier indication information, and corresponds to a device identifier, for example, bit 0 corresponds to device 0, bit 1 corresponds to device 1, and so on. When the value of the bit is 1, it indicates that the corresponding device identifier is the identifier of the device that is polled, and when the value of the bit is 0, it indicates that the corresponding device identifier is not the identifier of the device that is polled. As illustrated in FIG. 4, according to the values of 24 bits in the bitmap, the second device may determine 20 bits having a value of 1, and the device identifiers corresponding to the 20 bits are 20 device identifiers that are indicated by the first information, that is, the device identifiers indicated by the first information are device 0 to device 19.

In some embodiments, the operation that the first device sends the first information may include that the first device periodically sends the first information. Accordingly, the operation that the second device receives the first information sent by the first device may include that the second device periodically receives the first information. By periodically sending the first information, it is ensured that the second device is enabled to timely request a channel resource when necessary.

In some embodiments, the method for information transmission may further include the following operation. The first device sends the first periodic information to the second device in a process of establishing association with the second device. Alternatively, the first device broadcasts the first periodic information. The first periodic information is used to indicate a period size for sending the first information.

Accordingly, on the second device side, the method for information transmission may further include the following operation. The second device receives the first periodic information sent by the first device in a process of establishing association with the first device. Alternatively, the second device receives the first periodic information broadcast by the first device. The first periodic information is used to indicate a period size for sending the first information. That is, the first device may indicate a period size for sending the first information in the process of establishing association with the second device, or broadcast a period size for the first information, so that the second device can periodically process the first information according to a predetermined period size.

In some embodiments, the request information of the second device for the channel resource is sent on the first time unit. The first time unit is related to the N device identifiers. Accordingly, the above method for information transmission further includes the following operation. In the case that the N device identifiers include the device identifier of the second device, the first device receives the request information from the second device on the first time unit. That is, the first device receives the request information of the second device at the time domain position associated with the N device identifiers.

Exemplarily, the first time unit is located within a time window associated with the first information. The time window associated with the first information may include N time units after the first information is sent, and the N time units are used for N devices corresponding to N device identifiers to send request information respectively. Here, the time unit may refer to a time unit of information transmission in a communication system, for example, a slot in a WiFi system, or a symbol, a slot, a subframe in a cellular network, or the like.

In some embodiments, the first time unit is determined based on a relative position of the device identifier of the second device among the N device identifiers. Exemplarily, the first time unit may be determined in N time units in the time window associated with the first information based on the relative position. Specifically, if the device identifier of the second device is the i-th device identifier among the N device identifiers, the first time unit is the i-th time unit among the N time units.

For example, it is assumed that the first bitmap in the first information is 01101101, and the eight AIDs corresponding to the 8 bits are 0 to 7. The N AIDs indicated by the first information are 1, 2, 4, 5, and 7, respectively, and N = 5. If the AID of the second device is 2, the AID of the second device is the second one of the N AIDs, and the second device may send the request information on the second time unit after receiving the first information.

In some embodiments, the first time unit is a slot.

In some embodiments, a length of the slot is predefined, or configured by the first device. For example, in a WiFi system, the length of the slot for sending the request information may be predefined, or configured by the first device.

In some embodiments, the second device may send the request information when it needs to request the channel resource. That is, in the above method, the operation that in a case that the N device identifiers include the device identifier of the second device, the second device sends the request information for the channel resource includes the following operation. In a case that the N device identifiers include the device identifier of the second device, the second device sends the request information if the second device requests the second channel resource.

Accordingly, for the first device, the method further includes the following operation. In a case that the request information for the channel resource from the second device is received by the first device, the first device determines that the second device requests the channel resource.

In some embodiments, the second device may not send the request information in a case that the channel resource is not needed to be requested. That is, the method further includes the following operation. In a case that the N device identifiers include a device identifier of the second device, the second device does not send the request information if the second device does not request the second channel resource.

Accordingly, for the first device, the method further includes the following operation. The first device determines that the second device does not request the channel resource in a case that the request information of the second device for the channel resource is not received.

According to the above embodiments, the second device may determine whether to send the request information according to whether to request the channel resource. In this way, the power of the terminal can be saved.

**In** some embodiments, the second device may carry confirmation information in the request information to indicate that the channel resource is requested. That is, in a case that the second device requests the second channel resource, the request information includes confirmation information. Accordingly, the method further includes the following operation. In a case that the received request information includes confirmation information, the first device determines that the second device requests the channel resource.

**In** some embodiments, the second device may carry negation information in the request information to indicate that the channel resource is not requested. That is, in a case that the second device does not request the second channel resource, the request information includes negation information. Accordingly, the method further includes the following operation. In a case that the received request information includes negation information, the first device determines that the second device does not request the channel resource.

**In** some embodiments, the request information includes at least one of: a time length of the requested channel resource; frequency domain bandwidth; the number of channel(s); position(s) of the channel(s); or a communication type.

Here, the time length of the requested channel resource is, for example, a TXOP length. The communication type may refer to uplink communication, sidelink communication, or the like, or may refer to communication between the second device and the first device that is associated with the second device or communication between the second device and another device (third device).

Alternatively, the request information may include only the TXOP length, and other information may be predefined. Alternatively, the request information may include the TXOP length, the number of channel(s), and the position(s) of the channel(s), and other information may be predefined. It should be noted that in practical applications, one of the above information may be used, or a combination of the above multiple pieces of information may be used, and specific settings may be made according to system requirements, protocol agreements, and the like, which is not limited in the present disclosure.

In practical applications, the device identifier information carried by a single piece of first information is limited. In some scenarios, the first device may be associated with a large number of devices, for example, in a scenario in which a zero-power terminal is associated with the first device, the first device may be associated with a large number of zero-power terminals. The present disclosure also provides embodiments for meeting polling for a large number of devices.

In some embodiments, the first information is an i-th polling frame of L polling frames sequentially sent by the first device. L is an integer greater than or equal to 2, and i is a positive integer less than or equal to L. That is, the first device may sequentially send L polling frames, and the i-th polling frame indicates N device identifiers. It may be understood that other polling frames of the L polling frames may also indicate one or more device identifiers to realize polling of a large number of devices through the multiple polling frames. Different polling frames may indicate different numbers of device identifiers.

Exemplarily, L polling frames respectively correspond to L device identifier sets, and the i-th polling frame is used to indicate the N device identifier in a device identifier set corresponding to the i-th polling frame. Accordingly, the second device may determine the i-th polling frame associated with the second device in the L polling frames according to the device identifier set to which the second device belongs, and then determine whether the N device identifiers indicated by the i-th polling frame include the device identifier of the second device.

In some embodiments, the i-th polling frame is further used to indicate index information of the device identifier set corresponding to the i-th polling frame. Alternatively, each of the L polling frames may indicate index information of the corresponding device identifier set. Accordingly, the second device may determine a polling frame associated with the second device in the L polling frames based on the index information of the device identifier set corresponding to the second device.

Alternatively, the correspondence relationship between the second device and the index information of the device identifier set may be determined when an association is established between the second device and the first device. That is, the method may further include the following operation. In the process of establishing an association with the second device, the first device sends index information of a device identifier set corresponding to the second device to the second device. Accordingly, for the second device, in the process of establishing an association with the first device, the second device receives index information of a device identifier set corresponding to the second device sent by the first device.

As can be seen, according to the above embodiments, a large number of devices associated with the first device may be divided into multiple sets or multiple slices, and by sending multiple polling frames, each polling frame indicates for a set, the second device that receives the polling frame confirms whether its own device identifier is indicated in the corresponding polling frame according to the set to which it belongs. In this way, polling of a large number of devices can be achieved.

In other embodiments, the i-th polling frame is further used to indicate identifier offset information, and the identifier offset information is used to determine a device identifier starting point of the device identifier set corresponding to the i-th polling frame. Accordingly, the second device determines whether the i-th polling frame is related to the second device based on the device identifier starting point of the device identifier set corresponding to the i-th polling frame. In other words, the second device may determine a polling frame related to the second device based on a device identifier starting point of the device identifier set corresponding to each polling frame.

For example, the identifier offset information in a polling frame may include 8 bits and indicate that the AID starting point of the corresponding device identifier set is one of 0 to 255. The first polling frame indicates that the AID starting point is 0, the second polling frame indicates that the AID starting point is 64, the third polling frame indicates that the AID starting point is 128, and the fourth polling frame indicates that the AID starting point is 192. It may be determined that the AID set corresponding to the first polling frame includes 0-63, the AID set corresponding to the second polling frame includes 64-127, the AID set corresponding to the third polling frame includes 128-191, and the AID set corresponding to the fourth polling frame includes 192-255. As such, the second device may determine the relevant polling frame according to its own AID.

In some embodiments, the device identifier starting point includes a group identifier starting point, such as a group AID starting point.

For example, the first polling frame indicates that the group AID starting point is 1, and the second polling frame indicates that the group AID starting point is 3. Respective devices in the device group having the group AIDs of 1 and 2 may determine whether they are polled according to the first bitmap in the first polling frame.

According to the above embodiments, the first device may perform polling for a large number of associated devices, and respective associated devices do not need to be fixedly grouped, and more flexible instruction may be realized.

In some embodiments, the method further includes the following operation. The first device sends the second information. The second information includes M pieces of grant information corresponding to M devices, and each of the M pieces of grant information is used to indicate whether the channel resource is allocated for a device corresponding to the grant information, and M is an integer greater than or equal to 1. Accordingly, the second device receives the second information.

It may be understood that in a case that the M devices include the second device, the second device may determine whether the first device allocates the channel resource to the second device according to the corresponding grant information.

In some embodiments, the second information is determined based on at least one piece of request information received by the first device.

For example, the first device indicates 20 device identifiers in 24 device identifiers by sending the first information. After a device corresponding to each of the 20 device identifiers sends the request information according to its own requirement, the first device determines that 15 devices request channel resources based on the received request information. Based on this, the first device determines whether to allocate channel resources for the 15 devices respectively, and then obtains the second information.

In some embodiments, the M devices include devices requesting the channel resources. That is, the first device indicates whether to allocate a resource only for the device that requests the channel resource.

For example, the first information indicates 20 device identifiers, that is, 20 devices are polled. After receiving the request information reported by respective devices, the first device determines that 15 devices request channel resources, and the first device sends the second information to allocate resources for the 15 devices.

Alternatively, the second information may be further used to indicate device identifiers and order of the M devices, so that the second device can determine the M devices, and determine the grant information corresponding to the second device in the M pieces of grant information according to the order of the M devices in a case that the M devices include the second device.

In some embodiments, the M devices include the N devices. In this way, the second device may determine the M devices corresponding to the M pieces of grant information indicated in the second information according to the first information.

For example, the first information indicates 20 device identifiers, that is, 20 devices are polled, and after receiving the request information reported by respective devices, the first device sends the second information to allocate resources for the 20 devices. The second device may also determine that 20 pieces of grant information in the second information correspond to the 20 devices.

In some embodiments, the M devices include devices corresponding to each of device identifier sets corresponding to the first information. In this way, the second device may determine the M devices corresponding to the M pieces of grant information indicated in the second information according to the first information.

For example, the first information is used to indicate 20 device identifiers in the 24 device identifiers, for example, a 24-bit bitmap is used, and the 24 bits respectively correspond to AIDs 0-23, and the 20 bits have a value of 1. After receiving the request information reported by respective devices, the first device sends the second information to allocate resources for the 24 devices. The second device may also determine that 24 pieces of grant information in the second information correspond to the 24 devices.

In some embodiments, at least one of a time length of the channel resource, a frequency domain bandwidth, a number of channel(s), a position of the channel(s), or a communication type, allocated by the first device, is predefined.

In some embodiments, each piece of grant information is further used to indicate at least one of: a time length of the allocated channel resource; frequency domain bandwidth; a number of channel(s); position of the channel(s); or communication type.

Here, the time length of the requested channel resource is, for example, a TXOP length. The communication type may refer to uplink communication, sidelink communication, or the like, or may refer to communication between the second device and the first device associated with the second device or communication between the second device and another device (third device).

Alternatively, different grant information may indicate different TXOPs or channel numbers, so that the first device can flexibly allocate resources according to different types or different functions of devices associated with the first device.

Alternatively, the grant information may indicate a communication type. For example, in a case that the second device carries a communication type in the request information, the first device allocates the channel resource to the second device for the corresponding communication type. In this way, the requirements of different associated devices may be met. It should be noted that in the practical applications, the information indicated by the grant information may include one of the above information or a combination of multiple pieces of information in the above information, and specific settings may be made according to system requirements, protocol agreements, and the like, which is not limited in the present disclosure.

In some embodiments, the second information includes the second bitmap, and the M pieces of grant information are M bits in the second bitmap. Specifically, each of the M bits is used to indicate whether a channel resource is allocated to a corresponding device.

In some embodiments, in a case that a value of the first bit of the M bits is the second value, the first bit is used to indicate that the channel resource is allocated for a device corresponding to the first bit.

The second value is, for example, 1 or 0. Taking the second value being 1 as an example, it is assumed that the second bit is 01101101, which represents that channel resources are allocated to the second device, the third device, the fifth device, the sixth device, and the eighth device among the M devices.

Alternatively, in a case that the value of the second bit of the M bits is the fourth value, the second bit is used to indicate that a resource is not allocated for the device corresponding to the second bit. The fourth value is different from the second value. For example, if the second value is 1, the fourth value is 0, and if the second value is 0, the fourth value is 1.

In some embodiments, in a case that a large number of devices are associated with the first device, resource allocation for a large number of devices may be implemented in a manner similar to L polling frames in the above embodiment. Specifically, in some embodiments, the second information is the j-th grant frame of the X grant frames sequentially sent by the first device. The X grant frames respectively correspond to the X device identifier sets, the j-th grant frame includes the M pieces of grant information respectively corresponding to M device identifiers in a device identifier set corresponding to the j-th grant frame. X is an integer greater than or equal to 2, and j is a positive integer less than or equal to X.

Accordingly, the second device may determine the j-th grant frame associated with the second device in the X polling frames according to the device identifier set to which the second device belongs, and then determine whether the j-th grant frame indicates allocation of the channel resource for the second device.

In some embodiments, the j-th grant frame is further used to indicate index information of the device identifier set corresponding to the j-th grant frame. It may be understood that each grant frame may indicate index information of the device identifier set corresponding to the grant frame. That is, a large number of devices associated with the first device may be divided into multiple fixed sets, and the set related to the grant frame is indicated by index information in the grant frame. In this way, the second device may determine a grant frame related to the second device according to the index information of the device identifier set corresponding to the second device.

In some embodiments, the j-th grant frame is further used to indicate identifier offset information, and the identifier offset information is used to determine a device identifier starting point of the device identifier set. Alternatively, the device identifier starting point includes a group identifier starting point, such as a group AID.

The identifier offset information may be used to determine an AID starting point or a group AID starting point of the device identifier set corresponding to the j-th grant frame. In this way, the second device may determine a grant frame related to the second device according to the offset information in each grant frame. In this method, fixed grouping of a large number of associated devices is not required, and more flexible instruction is implemented.

In some embodiments, in a case that the second information indicates that the channel resource is allocated for the second device, the channel resource is used for information transmission between the second device and the first device, or information transmission between the second device and the third device. Accordingly, the above method may further include that in a case that the second information indicates that the channel resource is allocated for the second device, the second device performs information transmission between the second device and the first device or information transmission between the second device and the third device by using the channel resource. Exemplarily, the allocated channel resource may be used for uplink transmission or sidelink transmission.

In some embodiments, the above information transmission includes sending data by the second device and receiving acknowledgement (ACK) information for the data by the second device. Exemplarily, the information transmission between the second device and the first device may include that the second device sends data to the first device and the first device sends ACK information to the second device.

In some embodiments, the second information includes second duration information. The second duration information is related to a time length of the channel resource allocated by the first device. The second duration information is used to instruct the fourth device to set a NAV.

Exemplarily, in the WiFi system, the second information is carried by a MAC frame, which includes a duration field, and the value of the field needs to cover the time window associated with the second information, that is, the time window of the channel resource allocated to each associated device, so that other compatible devices sets their own NAVs according to the field, thereby realizing the reservation of channel occupancy time for the second device and protecting the information transmission time of the second device.

In some embodiments, the first information includes the first duration information. The first duration information is related to N time units associated with the first information. The first duration information is used to instruct the fifth device to set the NAV.

Exemplarily, in the WiFi system, the first information is carried by a MAC frame, which includes a duration field, and the value of the field needs to cover the time window associated with the first information, for example, N slots after the first information, so that other compatible devices sets their own NAVs according to the field, thereby realizing the reservation of channel occupancy time for the second device and protecting the time for the second device to transmit the request information.

In order to facilitate understanding of the technical solutions of the embodiment of the present disclosure, a specific application example of the above method for information transmission is provided below with reference to the drawings, taking the first device being an AP in a WiFi system and the second device being a zero-power terminal as an example. This application example includes the following processes.

### 1. The AP sends polling frame(s) (equivalent to the first information)

For the zero-power terminal associated with the AP, since it cannot support the channel access mechanism compatible with the existing device, its uplink transmission depends on the TXOP shared by the AP or other compatible devices. However, the AP does not know whether the zero-power terminal has the requirement for uplink transmission. If the channel access is directly performed and the obtained TXOP is shared with the zero-power terminal, but the zero-power terminal does not have the requirement for uplink transmission, it will cause the waste of channel resources. For example, for temperature monitoring in environmental monitoring or fire alarm, only when temperature abnormalities occur, monitored data needs to be reported.

For this reason, in the application example, the AP may periodically send a Polling frame to inquire whether the zero-power terminal associated with the AP needs to request TXOP. After receiving the polling frame, the zero-power terminal feeds back the information of whether to request a TXOP on a slot associated with the zero-power terminal.

Specifically, the polling frame may indicate the information of zero-power terminals that are polled, such as the identifiers of the zero-power terminals. Here, the identifier may be an AID or a group AID. The AID is an ID allocated by the AP for the zero-power terminal when the zero-power terminal is associated with the AP. The group AID corresponds to a group of AIDs.

Specifically, the information of zero-power terminals indicated in the polling frame may be indicated in the form of a bitmap, and each bit in the bitmap corresponds to an AID. For example, the first bit corresponds to AID = 0, and so on.

When the zero-power terminal receives its own ID information in the polling frame, it sends a TXOP request frame on a corresponding slot. The TXOP request frame carries TXOP request information. When the zero-power terminal requests the TXOP, the TXOP request frame may be sent in a corresponding slot, or the TXOP request information carried in the TXOP request frame is requesting. When the zero-power terminal does not request the TXOP, the TXOP request frame may not be sent in the corresponding slot, or the TXOP request information carried in the sent TXOP request frame may be not requesting. Further, the TXOP request information may further include requested TXOP information, which includes, but is not limited to, one or more of the following information: a TXOP length, a frequency domain bandwidth, the number of channel(s), position(s) of the channel(s), or the like.

Specifically, the polling frame may be sent periodically, the period may be indicated in the process of association, or broadcast through a beacon frame.

Specifically, the positions of the slots for the zero-power terminals sending the TXOP request frame are related to the information of the polled zero-power terminals indicated in the polling frame. For example, the position of the slot for a zero-power terminal sending the TXOP request frame corresponds to the relative position of the zero-power terminal among the polled zero-power terminals indicated in the polling frame. For example, when the polling frame indicates 20 zero-power terminals through the bitmap, and the polling frame corresponds to 20 slots, which are used for the 20 zero-power terminals to send the TXOP request frames, then the zero-power terminal corresponding to the n-th bit "1" sends the TXOP request frame by using the n-th slot.

Specifically, the length of the slot for sending the TXOP request frame may be predefined, or indicated by the AP.

As illustrated in FIG. 4, the AP sends a polling frame, which indicates at most 24 zero-power terminals through a 24-bit bitmap, polls 20 zero-power terminals in the 24 zero-power terminals, and the values of bits corresponding to the 20 zero-power terminals are 1.

The polling frame is associated with a time window, which may be referred to as a polling window. FIG. 5 illustrates a schematic diagram of a polling window in the application example. As illustrated in FIG. 5, the polling window includes 20 slots, and each slot corresponds to a polled zero-power terminal, which is used for the zero-power terminal to send a TXOP request frame. The polled zero-power terminal determines the used slot according to its relative position among all the polled zero-power terminals. As illustrated in FIG. 5, in the 20 polled zero-power terminals, 15 zero-power terminals request the TXOP and 5 zero-power terminals do not request the TXOP.

Further, the information of the zero-power terminals carried by one polling frame is limited. In order to poll a large number of zero-power terminals, polling may be performed through multiple polling frames, which may be referred to as polling slicing.

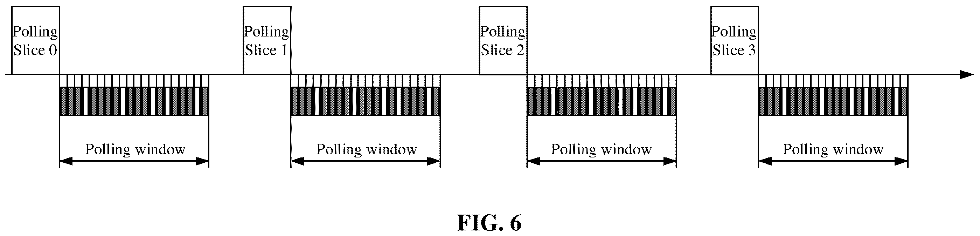

Specifically, the polling frames sent at different times may correspond to different groups of zero-power terminals. For example, one polling frame carries a 24-bits bitmap, the polling frame sent at the first time may indicate AIDs= 0-23, the polling frame sent at the second time may indicate AIDs = 24-47, and so on. Specifically, the AIDs may be divided into multiple slices, and each polling frame carries one slice of polling information of zero-power terminals. FIG. 6 illustrates a schematic diagram of multiple polling frames in the application example. As illustrates in FIG. 6, the polling frame corresponding to the polling slice 0 includes AIDs = 0-23, and the polling frame corresponding to the polling slice 1 includes AIDs = 24-47. The index of the polling slice may be indicated in the polling frame. Specifically, the correspondence relationship between the AIDs and the index of the polling slice may be obtained when the zero-power terminals are associated with the AP.

Specifically, the polling slices may not be fixedly divided, but may be dynamically determined by the polling frame. For example, the polling frame may indicate AID offset information for determining the AID starting point indicated by the bitmap. For example, the AID offset information includes 8 bits, which is able to indicate the AID starting point from 0 to 255. Further, the polling frame may indicate AID slice offset information, and the AID slice offset information indicates the number of offset AID slices. For example, one AID slice includes 24 AIDs. When the AID sluice offset information is 0, the AIDs indicated by the bitmap are the first AID slice, which includes AIDs = 0-23, and when the AID slice offset information is 1, the AIDs indicated by the bitmap are the second AID slice, which includes AIDs = 24-47, and so on.

### 2. The AP sends grant frame(s) (equivalent to the second information).

After obtaining the TXOP request(s) from the zero-power terminal(s), the AP allocates the TXOP(s) for the zero-power terminal(s) that requests the TXOP(s) according to the TXOP request(s).

The AP indicates grant information for one or more zero-power terminals in the grant frame. Specifically, the grant information may include whether the TXOP(s) is allocated to the corresponding zero-power terminal(s).

Specifically, one or more of the allocated TXOP length, allocated frequency domain resource, allocated channel(s), or the like may be predefined, or may be indicated in grant information. For example, the TXOP length is indicated in the grant information, and the TXOP length may correspond to all zero-power terminals for which the TXOPs are allocated, or the TXOP length(s) may be indicated for one or more zero-power terminals, respectively.

Specifically, the number of the pieces of grant information carried in the grant frame may be the same as the number of zero-power terminals that request the TXOPs. The number of the pieces of grant information carried in the grant frame may be the same as the number of polled zero-power terminals in the polling frame, and in this case, the AP may allocate the TXOP(s) for the zero-power terminal(s) that does not request the TXOP.

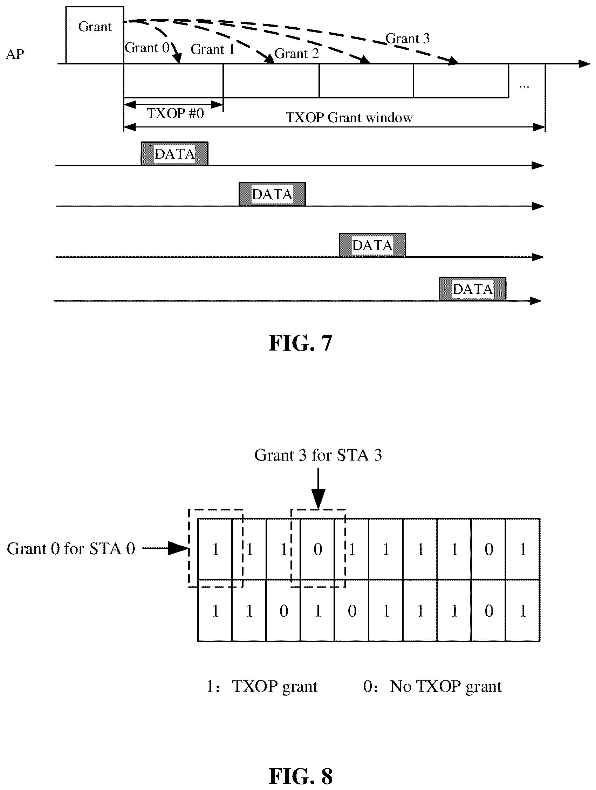

FIG. 7 illustrates a schematic diagram of resource allocation through a polling frame in the application example. The number of the pieces of grant information carried in the grant frame is the same as the number of zero-power terminals that request the TXOPs. That is, the grant frames Grant0, Grant1, Grant2, and Grant3 in FIG. 7 correspond to AID = 0, 1, 2, and 4 that request the TXOPs in FIG. 6, respectively. Here, in FIG. 6, the STA of AID = 3 does not request the TXOP, and therefore does not have corresponding grant information. In FIG. 7, STA n corresponds to AID = n, that is, STA 0 represents a zero-power terminal whose AID is 0, and so on.

Specifically, the grant information may be indicated in the form of a bitmap, in which each bit corresponds to grant information of a zero-power terminal, 1 indicates that the TXOP is allocated, and 0 indicates that the TXOP is not allocated. Specifically, when the number of the pieces of grant information is the same as the number of zero-power terminals that request the TXOPs, then according to the previous example, 15 zero-power terminals request TXOPs, so the bitmap may include 15 bits. When the number of the pieces of the grant information is the same as the number of polled zero-power terminals, the bitmap may include 20 bits. FIG. 8 illustrates a schematic diagram of a polling frame in the application example, and in the schematic diagram, the number of the pieces of grant information being the same as the number of polled zero-power terminals is taken as example. Since the STA of AID = 3 does not request the TXOP, the grant bit corresponding to the STA 3 is 0.

Similarly, the information of zero-power terminals carried by a grant is limited. In order to perform TXOP indication to a large number of zero-power terminals, the indication may be performed by multiple grants, which may be referred to as grant slicing.

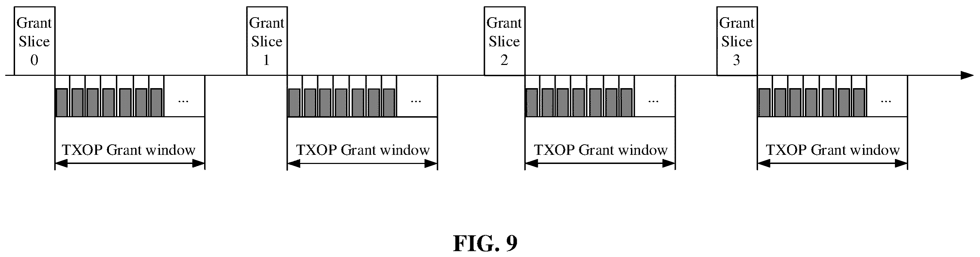

Specifically, the grant frames sent at different times may correspond to different groups of zero-power terminals. FIG. 9 illustrates a schematic diagram of grant slicing according to an embodiment of the present disclosure. For example, the grant frame carries a bitmap of up to 24 bits, the grant frame sent at the first time may indicate AIDs = 0-23, the grant frame sent at the second time may indicate AIDs = 24-47, and so on. Specifically, the AIDs may be divided into multiple slices, and each grant frame carries one slice of grant information of zero-power terminals. In the example illustrated in the following figure, Grant slice 0 includes AIDs = 0-23, and Grant slice 1 includes AIDs = 24-47. The index of the Grant slice may be indicated in the grant frame. Specifically, the correspondence relationship between the AIDs and the index of the Grant slice may be obtained when the zero-power terminal is associated with the AP.

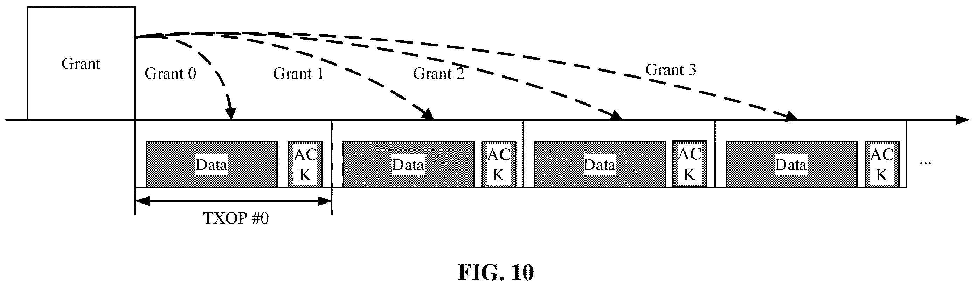

Further, FIG. 10 illustrates a diagram of an application of the TXOP in the application example. As illustrated in FIG. 10, the TXOP indicated by the AP to the zero-power terminal through the grant frame may be not only used for data transmission for the zero-power terminal, but also include an ACK information of the AP for data.

In addition, for the polling stage and the grant stage, the zero-power terminal needs to perform uplink transmission through the TXOP obtained by the AP. Therefore, the value set in the duration field in the polling frame needs to cover the polling window. The value set in the duration field in the grant frame also needs to cover the TXOP grant window. When other compatible devices receive the polling frame or grant frame, they set their own NAVs according to the duration field, thereby realizing the function of reserving channel occupancy time for zero-power devices and protecting the transmission time of communication of zero-power devices.

As can be seen, the embodiments of the present disclosure propose a method for allocating resources for uplink transmission of a zero-power terminal. The TXOP requests from the zero-power terminals are obtained through the polling process. According to the TXOP requests from zero-power terminals, TXOPs are allocated through the grant process, thus realizing TXOP allocation according to the requirements and reducing the waste of channel resources.

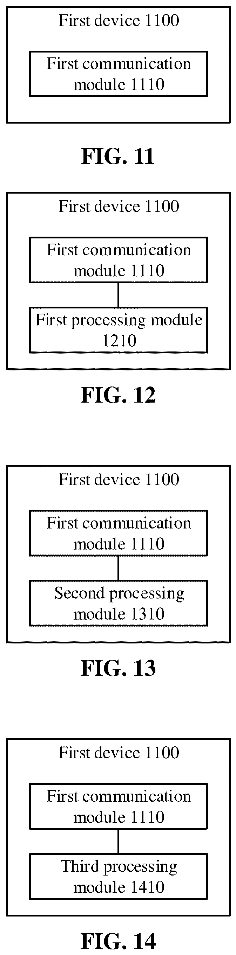

FIG. 11 is a schematic block diagram of the first device 1100 according to an embodiment of the present disclosure. The first device 1100 may include the first communication module 1110.

The first communication module 1110 is configured to send the first information. The first information is used to indicate N device identifiers, so that the second device that receives the first information sends request information for a channel resource in a case that the N device identifiers include a device identifier of the second device. N is an integer greater than or equal to 2.

In one embodiment, the first device is an AP or an STA, and the second device is a zero-power terminal associated with the first device.

In one embodiment, the channel resource is TXOP(s) obtained through channel access.

In one embodiment, the first information includes K pieces of identifier indication information respectively corresponding to K device identifiers, the K pieces of identifier indication information are used to indicate the N device identifiers among the K device identifiers, and K is an integer greater than or equal to N.

In one embodiment, the first information includes the first bitmap, the K pieces of identifier indication information are K bits in the first bitmap, and the N device identifiers include device identifiers corresponding to bits whose values are the first value among the K bits.

In one embodiment, the first communication module 1110 is further configured to periodically send the first information.

In one embodiment, the first communication module 1110 is further configured to receive the request information from the second device on the first time unit in a case that the N device identifiers include the device identifier of the second device. The first time unit is associated with N device identifiers.

In one embodiment, the first time unit is determined based on a relative position of the device identifier of the second device among the N device identifiers.

In one embodiment, the first time unit is a slot.

In one embodiment, a length of the slot is predefined, or is configured.

In one embodiment, as illustrated in FIG. 12, the first device 1100 further includes the first processing module 1210.

The first processing module 1210 is configured to determine that the second device requests the channel resource in a case that the request information is received.

In one embodiment, as illustrated in FIG. 13, the first device 1100 further includes the second processing module 1310.

The second processing module 1310 is configured to determine that the second device does not request the channel resource in a case that the request information is not received.

In one embodiment, as illustrated in FIG. 14, the first device 1100 further includes the third processing module 1410.

The third processing module 1410 is configured to determine that the second device requests the channel resource in a case that the received request information includes confirmation information.

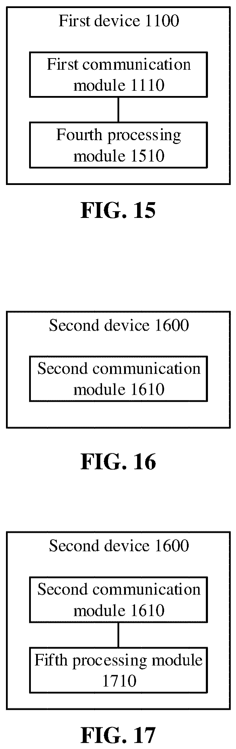

In one embodiment, as illustrated in FIG. 15, the first device 1100 further includes the fourth processing module 1510.

The fourth processing module 1510 is configured to determine that the second device does not request the channel resource in a case that the received request information includes negation information.

In one embodiment, the request information includes at least one of: a time length of the requested channel resource; frequency domain bandwidth; the number of channel(s); position(s) of the channel(s); or a communication type.

In one embodiment, the first information is an i-th polling frame of L polling frames that are sequentially sent.

The L polling frames respectively correspond to L device identifier sets, and the i-th polling frame is used to indicate the N device identifiers in a device identifier set corresponding to the i-th polling frame, L is an integer greater than or equal to 2, and i is a positive integer less than or equal to L.

In one embodiment, the i-th polling frame is further configured to indicate index information of the device identifier set corresponding to the i-th polling frame.

In one embodiment, the first communication module 1110 is further configured to send index information of a device identifier set corresponding to the second device to the second device in a process of establishing an association with the second device.

In one embodiment, the i-th polling frame is further used to indicate identifier offset information, and the identifier offset information is used to determine a device identifier starting point of the device identifier set corresponding to the i-th polling frame.

In one embodiment, the device identifier starting point includes a slice identifier starting point.

In one embodiment, the first communication module 1110 is further configured to send the second information. The second information includes M pieces of grant information respectively corresponding to M devices, each of the M pieces of grant information is used to indicate whether a channel resource is allocated for a device corresponding to the grant information, and M is an integer greater than or equal to 1.

In one embodiment, the second information is determined based on at least one piece of received request information.

In one embodiment, the M devices include devices requesting channel resources.

In one embodiment, the M devices include N devices.

In one embodiment, the M devices include devices corresponding to each of device identifier sets corresponding to the first information.

In one embodiment, at least one of a time length of the allocated channel resource, an allocated frequency domain bandwidth, a number of allocated channel(s), position(s) of the allocated channel(s), or an allocated communication type is predefined.

In one embodiment, each piece of grant information is further used to indicate at least one of: a time length of the allocated channel resource; frequency domain bandwidth; the number of channel(s); position(s) of the channel(s); or communication type.

In one embodiment, the second information includes the second bitmap, and the M pieces of grant information are M bits in the second bitmap.

In one embodiment, in a case that a value of the first bit of the M bits is the second value, the first bit is used to indicate that a channel resource is allocated for a device corresponding to the first bit.

In one embodiment, the second information is the j-th grant frame of X grant frames that are sequentially sent.

The X grant frames respectively correspond to X device identifier sets, the j-th grant frame includes the M pieces of grant information respectively corresponding to M device identifiers in a device identifier set corresponding to the j-th grant frame, X is an integer greater than or equal to 2, and j is a positive integer less than or equal to X.

In one embodiment, the j-th grant frame is further used to indicate index information of the device identifier set corresponding to the j-th grant frame.

In one embodiment, the j-th grant frame is further used to indicate identifier offset information, and the identifier offset information is used to determine a device identifier starting point of the device identifier set.

In one embodiment, the device identifier starting point includes a slice identifier starting point.

In one embodiment, in a case that the second information indicates that the channel resource is allocated for the second device, the channel resource is used for information transmission between the second device and the first device, or information transmission between the second device and the third device.

In one embodiment, the information transmission includes sending data by the second device and receiving ACK information for the data by the second device.

In one embodiment, the second information includes the second duration information. The second duration information is related to a time length of the channel resource allocated by the first device. The second duration information is used to instruct the fourth device to set a NAV.

In one embodiment, the first information includes the first duration information. The first duration information is related to N time units associated with the first information. The first duration information is used to instruct the fifth device to set a NAV.

In one embodiment, the first communication module 1110 is further configured to send the first periodic information to the second device in a process of establishing an association with the second device, or broadcast the first periodic information. The first periodic information is used to indicate a period size for sending the first information.

In one embodiment, the device identifiers are AIDs or slice AIDs.

The first device 1100 according to the embodiment of the present disclosure may realize the corresponding functions of the first device in the above method embodiment. For the corresponding processes, functions, implementation methods, and beneficial effects of respective modules (sub-modules, units, components, etc.) in the first device 1100, the reference may be made to the corresponding description in the above method embodiment, which will not be repeatedly described here. It should be noted that the functions described with respect to respective modules (sub-modules, units, components, etc.) in the first device 1100 of the embodiment of the present disclosure may be implemented by different modules (sub-modules, units, components, etc.), or may be implemented by the same module (sub-module, unit, component, etc.).

FIG. 16 is a schematic block diagram of the second device 1600 according to an embodiment of the present disclosure. The second device 1600 may include the second communication module 1610.

The second communication module 1610 is configured to receive the first information sent by the first device. The first information is used to indicate N device identifiers.

The second communication module 1610 is further configured to send request information for a channel resource in a case that the N device identifiers include a device identifier of the second device. N is an integer greater than or equal to 2.

In one embodiment, the first device is an AP or a STA, and the second device is a zero-power terminal associated with the first device.

In one embodiment, the channel resource is TXOP(s) obtained by the first device through channel access.

In one embodiment, the first information includes K pieces of identifier indication information respectively corresponding to K device identifiers, the K pieces of identifier indication information are used to indicate the N device identifiers among the K device identifiers, and K is an integer greater than or equal to N.

In one embodiment, the first information includes the first bitmap, the K pieces of identifier indication information are K bits in the first bitmap, and the N device identifiers include device identifiers corresponding to bits whose values are the first value among the K bits.

In one embodiment, the second communication module 1610 is further configured to periodically receive the first information.

In one embodiment, the request information is sent on the first time unit, and the first time unit is related to the N device identifiers.

In one embodiment, the first time unit is determined based on a relative position of the device identifier of the second device among the N device identifiers.

In one embodiment, the first time unit is a slot.

In one embodiment, a length of the slot is predefined, or configured by the first device.

In one embodiment, the second communication module 1610 is further configured to send the request information if the second channel resource is requested in the case that the N device identifiers include the device identifier of the second device.

In one embodiment, the second communication module 1610 is further configured to not send the request information if the second channel resource is not requested in the case that the N device identifiers include the device identifier of the second device.

In one embodiment, in a case that the second channel resource is requested, the request information includes confirmation information.

In one embodiment, in a case that the second channel resource is not requested, the request information includes negation information.

In one embodiment, the request information includes at least one of: a time length of the requested channel resource; frequency domain bandwidth; the number of channel(s); position(s) of the channel(s); or a communication type.

In one embodiment, the first information is an i-th polling frame of L polling frames sequentially sent by the first device.

The L polling frames respectively correspond to L device identifier sets, and the i-th polling frame is used to indicate the N device identifiers in a device identifier set corresponding to the i-th polling frame, L is an integer greater than or equal to 2, and i is a positive integer less than or equal to L.

In one embodiment, the i-th polling frame is further used to indicate index information of the device identifier set corresponding to the i-th polling frame.

As illustrated in FIG. 17, the second device 1600 further includes the fifth processing module 1710.

The fifth processing module 1710 is configured to determine a polling frame, related to the second device, among the L polling frames based on index information of a device identifier set corresponding to the second device.

In one embodiment, the second communication module 1610 is further configured to receive index information, of a device identifier set corresponding to the second device, sent by the first device in a process of establishing an association with the first device.

In one embodiment, the i-th polling frame is further used to indicate identifier offset information, and the identifier offset information is used to determine a device identifier starting point of the device identifier set corresponding to the i-th polling frame.

The fifth processing module is further configured to determine whether the i-th polling frame is related to the second device based on the device identifier starting point of the device identifier set corresponding to the i-th polling frame.

In one embodiment, the device identifier starting point includes a slice identifier starting point.

In one embodiment, the second communication module 1610 is further configured to receive the second information. The second information includes M pieces of grant information respectively corresponding to M devices, each of the M pieces of grant information is used to indicate whether a channel resource is allocated for a device corresponding to the grant information, and M is an integer greater than or equal to 1.

In one embodiment, the second information is determined based on at least one piece of request information received by the first device.

In one embodiment, the M devices include devices requesting channel resources.

In one embodiment, the M devices include N devices.

In one embodiment, the M devices include devices corresponding to each of device identifier sets corresponding to the first information.

In one embodiment, at least one of a time length of the channel resource, a frequency domain bandwidth, a number of channel(s), position(s) of the channel(s), or a communication type, allocated by the first device, is predefined.

In one embodiment, each piece of grant information is further used to indicate at least one of: a time length of the allocated channel resource; frequency domain bandwidth; the number of channel(s); position(s) of the channel(s); or a communication type.

In one embodiment, the second information includes the second bitmap, and the M pieces of grant information are M bits in the second bitmap.

In one embodiment, in a case that a value of the first bit of the M bits is the second value, the first bit is used to indicate that a channel resource is allocated for a device corresponding to the first bit.

In one embodiment, the second information is a j-th grant frame of X grant frames sequentially sent by the first device.

The X grant frames respectively correspond to X device identifier sets, the j-th grant frame includes the M pieces of grant information respectively corresponding to M device identifiers in a device identifier set corresponding to the j-th grant frame, X is an integer greater than or equal to 2, and j is a positive integer less than or equal to X.

In one embodiment, the j-th grant frame is further used to indicate index information of the device identifier set corresponding to the j-th grant frame.

In one embodiment, the j-th grant frame is further used to indicate identifier offset information, and the identifier offset information is used to determine a device identifier starting point of the device identifier set.

In one embodiment, the device identifier starting point includes a slice identifier starting point.

In one implementation, the second communication module 1610 is further configured to, in a case that the second information indicates that channel resource is allocated, perform information transmission with the first device or information transmission with the third device by using the channel resource.

In one embodiment, the information transmission includes sending data and receiving ACK information for the data.

In one embodiment, the second information includes the second duration information. The second duration information is related to a time length of channel resource allocated by the first device. The second duration information is used to instruct the fourth device to set a NAV.

In one embodiment, the first information includes the first duration information. The first duration information is related to N time units associated with the first information. The first duration information is used to instruct the fifth device to set a NAV.

In one embodiment, the second communication module 1610 is further configured to receive the first periodic information sent by the first device in a process of establishing an association with the first device; or receive the first periodic information broadcast by the first device. The first periodic information is used to indicate a period size for sending the first information.

In one embodiment, the device identifiers are AIDs or slice AIDs.

The second device 1600 according to the embodiment of the present disclosure may realize the corresponding functions of the second device in the above method embodiment. For the corresponding processes, functions, implementation methods, and beneficial effects of respective modules (sub-modules, units, components, etc.) in the second device 1600, the reference is made to the corresponding description in the above method embodiment, which will not be repeatedly described here. It should be noted that the functions described with respect to respective modules (sub-modules, units, components, etc.) in the second device 1600 of the embodiment of the present disclosure may be implemented by different modules (sub-modules, units, components, etc.), or may be implemented by the same module (sub-module, unit, component, etc.).

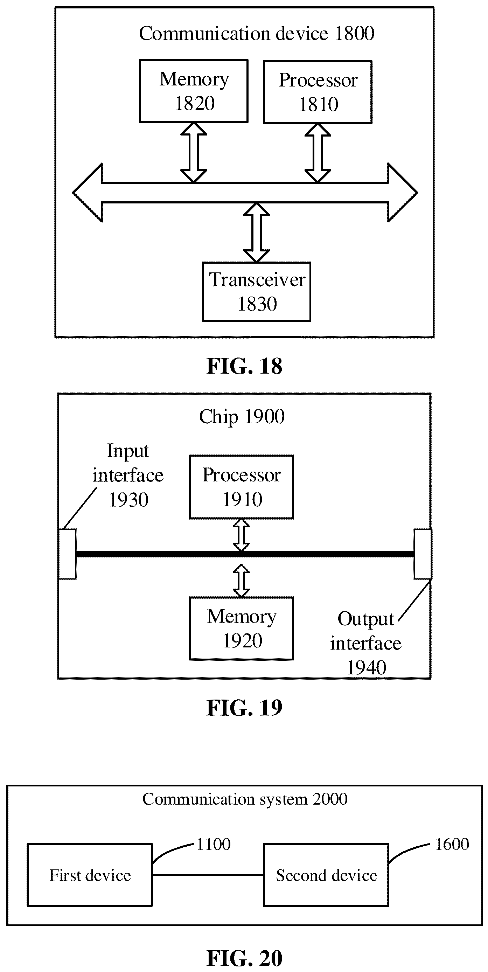

FIG. 18 is a schematic structural diagram of a communication device 1800 according to an embodiment of the present disclosure. The communication device 1800 includes a processor 1810. The processor may invoke and execute a computer program from a memory to cause the communication device 1800 to implement the method in the embodiments of the present disclosure.

In one embodiment, the communication device 1800 may further include a memory 1820. The processor 1810 may invoke and execute a computer program from the memory 1820 to cause the communication device 1800 to implement the method in the embodiments of the present disclosure.

The memory 1820 may be a separate device independent of the processor 1810 or may be integrated in the processor 1810.

In one embodiment, the communication device 1800 may further include a transceiver 1830. The processor 1810 may control the transceiver 1830 to communicate with other devices, in particular, may send information or data to or receive information or data sent by other devices.

The transceiver 1830 may include a transmitter and a receiver. The transceiver 1830 may further include one or more antennas.

In one embodiment, the communication device 1800 may be the first device of the embodiments of the present disclosure, and the communication device 1800 may implement corresponding processes implemented by the first device in respective methods of the embodiments of the present disclosure, which will not be described herein for the sake of brevity.

In one embodiment, the communication device 1800 may be the second device of the embodiments of the present disclosure, and the communication device 1800 may implement corresponding processes implemented by the second device in respective methods of the embodiments of the present disclosure, which will not be described herein for the sake of brevity.

FIG. 19 is a schematic structural diagram of a chip 1900 according to an embodiment of the present disclosure. The chip 1900 includes a processor 1910. The processor may invoke and execute a computer program from a memory to implement the methods in the embodiments of the present disclosure.

In one embodiment, the chip 1900 may further include a memory 1920. Here, the processor 1910 may invoke and execute a computer program from the memory 1920 to implement the method performed by the first device in the embodiments of the present disclosure.

The memory 1920 may be a separate device independent of the processor 1910 or may be integrated in the processor 1910.

In one embodiment, the chip 1900 may further include an input interface 1930. The processor 1910 may control the input interface 1930 to communicate with other devices or chips, specifically, may acquire information or data sent by other devices or chips.

In one embodiment, the chip 1900 may further include an output interface 1940. The processor 1910 may control the output interface 1940 to communicate with other devices or chips, specifically, may output information or data to other devices or chips.

In one embodiment, the chip may be applied to the first device in the embodiments of the present disclosure, and the chip may implement corresponding processes implemented by the first device in respective methods of the embodiments of the present disclosure, which will not be described herein for the sake of brevity.

In one embodiment, the chip may be applied to the second device in the embodiments of the present disclosure, and the chip may implement corresponding processes implemented by the second device in respective methods of the embodiments of the present disclosure, which will not be described herein for the sake of brevity.

It should be understood that the chip mentioned in the embodiments of the present disclosure may also be referred to as a system level chip, a system chip, a chip system, or a system-on-chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The general-purpose processor mentioned above may be a microprocessor or any conventional processor or the like.

The memory mentioned above may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the memory described above is illustrative but not limiting, for example, the memory in the embodiments of the present disclosure may also be a static RAM (SRAM), a dynamic RAM (DRAM), a synchronous DRAM (SDRAM), a double data rate SDRAM (DDRAM), an enhanced SDRAM (ESDRAM), a synch link DRAM (SLDRAM), a Direct Rambus RAM (DR RAM), and the like. That is, the memory in the embodiments of the present disclosure is intended to include, but is not limited to, these and any other suitable type of memory.

FIG. 20 is a schematic block diagram of a communication system 2000 according to an embodiment of the present disclosure. The communication system 2000 includes the first device 1100 and the second device 1600.

Alternatively, the first device 1100 may be configured to send the first information. The first information is used to indicate N device identifiers, so that the second device that receives the first information send request information for a channel resource in a case that the N device identifiers include a device identifier of the second device. N is an integer greater than or equal to 2.

Alternatively, the second device 1600 may be configured to receive the first information sent by the first device. The first information is used to indicate N device identifiers. The second device 1600 may be further configured to send request information for channel resource in a case that the N device identifiers include a device identifier of the second device. N is an integer greater than or equal to 2.

The above embodiments may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to embodiments of the present disclosure are generated in whole or in part. The computer may be a general purpose computer, a special purpose computer, a computer network, or other programmable device. The computer instructions may be stored in a computer-readable storage medium or sent from one computer-readable storage medium to another computer-readable storage medium, for example, the computer instructions may be transmitted from one website station, computer, server, or data center by wired (e.g., coaxial cable, optical fiber, Digital Subscriber Line (DSL)) or wireless (e.g., infrared, wireless, microwave, etc.) means to another website station, computer, server, or data center. The computer-readable storage medium may be any available medium accessible by a computer or a data storage device such as a server, a data center, or the like that contains one or more available media integrations. The available medium may be a magnetic medium (e.g., a floppy disk, a hard disk, a magnetic tape), an optical medium (e.g., a DVD), or a semiconductor medium (e.g., a Solid State Disk (SSD)), etc.

It should be understood that in various embodiments of the present disclosure, the sequence numbers of the above processes do not mean the sequence of execution, and the sequence of execution of each process should be determined by its function and internal logic, and should not constitute any limitation on the implementation of the embodiments of the present disclosure.

Those skilled in the art can clearly understand that for convenience and conciseness of the description, the specific working processes of the systems, apparatus, and units described above may refer to the corresponding processes in the aforementioned method embodiments, which will not be repeatedly described herein.

The above is merely a specific embodiment of the present disclosure, but the scope of protection of the present disclosure is not limited thereto. Any person skilled in the art may easily think of changes or substitutions within the technical scope disclosed in the present disclosure, which should be covered within the scope of protection of the present disclosure. Therefore, the scope of protection of the present disclosure should be based on the scope of protection of claims.

## Claims

1. A method for information transmission, comprising:
sending, by a first device, first information, wherein the first information is used to indicate N device identifiers, so that a second device that receives the first information sends request information for a channel resource in a case that the N device identifiers comprise a device identifier of the second device, and N is an integer greater than or equal to 2.

2. The method of claim 1, wherein the first device is an access point (AP) or a station (STA), and the second device is a zero-power terminal associated with the first device.

3. The method of claim 1 or 2, wherein the channel resource is transmission opportunity(s) (TXOP(s)) obtained by the first device through channel access.

4. The method of any one of claims 1 to 3, wherein the first information comprises K pieces of identifier indication information respectively corresponding to K device identifiers, the K pieces of identifier indication information are used to indicate the N device identifiers among the K device identifiers, and K is an integer greater than or equal to N.

5. The method of claim 4, wherein the first information comprises a first bitmap, the K pieces of identifier indication information are K bits in the first bitmap, and the N device identifiers comprise device identifiers corresponding to bits whose values are a first value among the K bits.

6. The method of any one of claims 1 to 5, wherein sending, by the first device, the first information comprises:
periodically sending, by the first device, the first information.

7. The method of any one of claims 1 to 6, further comprising:
in the case that the N device identifiers comprise the device identifier of the second device, receiving, by the first device, the request information from the second device on a first time unit, wherein the first time unit is related to the N device identifiers.

8. The method of claim 7, wherein the first time unit is determined based on a relative position of the device identifier of the second device among the N device identifiers.

9. The method of claim 8, wherein the first time unit is a slot.

10. The method of claim 9, wherein a length of the slot is predefined, or is configured by the first device.

11. The method of any one of claims 7 to 10, further comprising:
in a case that the request information is received by the first device, determining, by the first device, that the second device requests the channel resource.

12. The method of any one of claims 7 to 11, further comprising:
in a case that the request information is not received by the first device, determining, by the first device, that the second device does not request the channel resource.

13. The method of any one of claims 7 to 10, further comprising:
in a case that the received request information comprises confirmation information, determining, by the first device, that the second device requests the channel resource.

14. The method of any one of claims 7 to 10 and 13, further comprising:
in a case that the received request information comprises negation information, determining, by the first device, that the second device does not request the channel resource.

15. The method of any one of claims 7 to 14, wherein the request information comprises at least one of:
a time length of the requested channel resource;
frequency domain bandwidth;
a number of channel(s);
position(s) of the channel(s); or
a communication type.

16. The method of any one of claims 1 to 15, wherein the first information is an i-th polling frame of L polling frames sequentially sent by the first device; and
the L polling frames respectively correspond to L device identifier sets, and the i-th polling frame is used to indicate the N device identifiers in a device identifier set corresponding to the i-th polling frame, L is an integer greater than or equal to 2, and i is a positive integer less than or equal to L.

17. The method of claim 16, wherein the i-th polling frame is further used to indicate index information of the device identifier set corresponding to the i-th polling frame.

18. The method of claim 16 or 17, further comprising:
sending, by the first device to the second device, index information of a device identifier set corresponding to the second device in a process of establishing an association with the second device.

19. The method of claim 16, wherein the i-th polling frame is further used to indicate identifier offset information, and the identifier offset information is used to determine a device identifier starting point of the device identifier set corresponding to the i-th polling frame.

20. The method of claim 19, wherein the device identifier starting point comprises a slice identifier starting point.

21. The method of any one of claims 1 to 20, further comprising:
sending, by the first device, second information, wherein the second information comprises M pieces of grant information respectively corresponding to M devices, each of the M pieces of grant information is used to indicate whether a channel resource is allocated for a device corresponding to the grant information, and M is an integer greater than or equal to 1.

22. The method of claim 21, wherein the second information is determined based on at least one piece of request information received by the first device.

23. The method of claim 21 or 22, wherein the M devices comprise devices requesting channel resources.

24. The method of claim 21 or 22, wherein the M devices comprise N devices.

25. The method of claim 21 or 22, wherein the M devices comprise devices corresponding to each of device identifier sets corresponding to the first information.

26. The method of any one of claims 21 to 25, wherein at least one of a time length of the channel resource, a frequency domain bandwidth, a number of channel(s), position(s) of the channel(s), or a communication type, allocated by the first device, is predefined.

27. The method of any one of claims 21 to 25, wherein each piece of grant information is further used to indicate at least one of:
a time length of the allocated channel resource;
frequency domain bandwidth;
a number of channel(s);
position(s) of the channel(s); or
communication type.

28. The method of any one of claims 21 to 26, wherein the second information comprises a second bitmap, and the M pieces of grant information are M bits in the second bitmap.

29. The method of claim 28, wherein in a case that a value of a first bit of the M bits is a second value, the first bit is used to indicate that a channel resource is allocated for a device corresponding to the first bit.

30. The method of any one of claims 21 to 29, wherein the second information is a j-th grant frame of X grant frames sequentially sent by the first device; and
the X grant frames respectively correspond to X device identifier sets, the j-th grant frame comprises the M pieces of grant information respectively corresponding to M device identifiers in a device identifier set corresponding to the j-th grant frame, X is an integer greater than or equal to 2, and j is a positive integer less than or equal to X.

31. The method of claim 30, wherein the j-th grant frame is further used to indicate index information of the device identifier set corresponding to the j-th grant frame.

32. The method of claim 30, wherein the j-th grant frame is further used to indicate identifier offset information, and the identifier offset information is used to determine a device identifier starting point of the device identifier set.

33. The method of claim 32, wherein the device identifier starting point comprises a slice identifier starting point.

34. The method of any one of claims 21 to 33, wherein in a case that the second information indicates that the channel resource is allocated for the second device, the channel resource is used for information transmission between the second device and the first device, or information transmission between the second device and a third device.

35. The method of claim 34, wherein the information transmission comprises sending data by the second device and receiving acknowledgement (ACK) information for the data by the second device.

36. The method of any one of claims 21 to 35, wherein the second information comprises second duration information, the second duration information is related to a time length of the channel resource allocated by the first device, and the second duration information is used to instruct a fourth device to set a network allocation vector (NAV).

37. The method of any one of claims 1 to 36, wherein the first information comprises first duration information, the first duration information is related to N time units associated with the first information, and the first duration information is used to instruct a fifth device to set a NAV.

38. The method of any one of claims 1 to 37, further comprising:
sending, by the first device, first periodic information to the second device in a process of establishing an association with the second device; or
broadcasting, by the first device, the first periodic information, wherein the first periodic information is used to indicate a period size for sending the first information.

39. The method of any one of claims 1 to 38, wherein the device identifiers are association identifiers (AIDs) or slice AIDs.

40. A method for information transmission, comprising:
receiving, by a second device, first information sent by a first device, wherein the first information is used to indicate N device identifiers; and
in a case that the N device identifiers comprise a device identifier of the second device, sending, by the second device, request information for a channel resource, wherein N is an integer greater than or equal to 2.

41. The method of claim 40, wherein the first device is an access point (AP) or a station (STA), and the second device is a zero-power terminal associated with the first device.

42. The method of claim 40 or 41, wherein the channel resource is transmission opportunity(s) (TXOP(s)) obtained by the first device through channel access.

43. The method of any one of claims 40 to 42, wherein the first information comprises K pieces of identifier indication information respectively corresponding to K device identifiers, the K pieces of identifier indication information are used to indicate the N device identifiers among the K device identifiers, and K is an integer greater than or equal to N.

44. The method of claim 43, wherein the first information comprises a first bitmap, the K pieces of identifier indication information are K bits in the first bitmap, and the N device identifiers comprise device identifiers corresponding to bits whose values are a first value among the K bits.

45. The method of any one of claims 40 to 44, wherein receiving, by the second device, the first information sent by the first device comprises:
periodically receiving, by the second device, the first information.

46. The method of any one of claims 40 to 45, wherein the request information is sent on a first time unit, and the first time unit is related to the N device identifiers.

47. The method of claim 46, wherein the first time unit is determined based on a relative position of the device identifier of the second device among the N device identifiers.

48. The method of claim 47, wherein the first time unit is a slot.

49. The method of claim 47, wherein a length of the slot is predefined, or is configured by the first device.

50. The method of any one of claims 40 to 49, wherein in the case that the N device identifiers comprise the device identifier of the second device, sending, by the second device, the request information for the channel resource comprises:
in the case that the N device identifiers comprise the device identifier of the second device, if the second device requests the second channel resource, sending, by the second device, the request information.

51. The method of any one of claims 40 to 50, further comprising:
in the case that the N device identifiers comprise the device identifier of the second device, if the second device does not request the second channel resource, not sending, by the second device, the request information.

52. The method of any one of claims 40 to 50, wherein in a case that the second device requests the second channel resource, the request information comprises confirmation information.

53. The method of any one of claims 40 to 50 and 52, wherein in a case that the second device does not request the second channel resource, the request information comprises negation information.

54. The method of any one of claims 40 to 53, wherein the request information comprises at least one of:
a time length of the requested channel resource;
frequency domain bandwidth;
a number of channel(s);
position(s) of the channel(s); or
a communication type.

55. The method of any one of claims 40 to 54, wherein the first information is an i-th polling frame of L polling frames sequentially sent by the first device; and
the L polling frames respectively correspond to L device identifier sets, and the i-th polling frame is used to indicate the N device identifiers in a device identifier set corresponding to the i-th polling frame, L is an integer greater than or equal to 2, and i is a positive integer less than or equal to L.

56. The method of claim 55, wherein the i-th polling frame is further used to indicate index information of the device identifier set corresponding to the i-th polling frame, and
the method further comprises:
determining, by the second device based on index information of a device identifier set corresponding to the second device, a polling frame, related to the second device, among the L polling frames.

57. The method of claim 55 or 56, further comprising:
receiving, by the second device, index information, of a device identifier set corresponding to the second device, sent by the first device in a process of establishing an association with the first device.

58. The method of claim 57, wherein the i-th polling frame is further used to indicate identifier offset information, and the identifier offset information is used to determine a device identifier starting point of the device identifier set corresponding to the i-th polling frame, and
the method further comprises:
determining, by the second device based on the device identifier starting point of the device identifier set corresponding to the i-th polling frame, whether the i-th polling frame is related to the second device.

59. The method of claim 58, wherein the device identifier starting point comprises a slice identifier starting point.

60. The method of any one of claims 40 to 59, further comprising:
receiving, by the second device, second information, wherein the second information comprises M pieces of grant information respectively corresponding to M devices, each of the M pieces of grant information is used to indicate whether a channel resource is allocated for a device corresponding to the grant information, and M is an integer greater than or equal to 1.

61. The method of claim 60, wherein the second information is determined based on at least one piece of request information received by the first device.

62. The method of claim 60 or 61, wherein the M devices comprise devices requesting channel resources.

63. The method of claim 60 or 61, wherein the M devices comprise N devices.

64. The method of claim 60 or 61, wherein the M devices comprise devices corresponding to each of device identifier sets corresponding to the first information.

65. The method of any one of claims 60 to 64, wherein at least one of a time length of the channel resource, a frequency domain bandwidth, a number of channel(s), position(s) of the channel(s), or a communication type, allocated by the first device, is predefined.

66. The method of any one of claims 60 to 64, wherein each piece of grant information is further used to indicate at least one of:
a time length of the allocated channel resource;
frequency domain bandwidth;
a number of channel(s);
position(s) of the channel(s); or
a communication type.

67. The method of any one of claims 60 to 65, wherein the second information comprises a second bitmap, and the M pieces of grant information are M bits in the second bitmap.

68. The method of claim 67, wherein in a case that a value of a first bit of the M bits is a second value, the first bit is used to indicate that a channel resource is allocated for a device corresponding to the first bit.

69. The method of any one of claims 60 to 68, wherein the second information is a j-th grant frame of X grant frames sequentially sent by the first device; and
the X grant frames respectively correspond to X device identifier sets, the j-th grant frame comprises the M pieces of grant information respectively corresponding to M device identifiers in a device identifier set corresponding to the j-th grant frame, X is an integer greater than or equal to 2, and j is a positive integer less than or equal to X.

70. The method of claim 69, wherein the j-th grant frame is further used to indicate index information of the device identifier set corresponding to the j-th grant frame.

71. The method of claim 69, wherein the j-th grant frame is further used to indicate identifier offset information, and the identifier offset information is used to determine a device identifier starting point of the device identifier set.

72. The method of claim 71, wherein the device identifier starting point comprises a slice identifier starting point.

73. The method of any one of claims 60 to 72, further comprising:
in a case that the second information indicates that the channel resource is allocated for the second device, performing, by the second device, information transmission between the second device and the first device, or information transmission between the second device and a third device, by using the channel resource.

74. The method of claim 73, wherein the information transmission comprises sending data by the second device and receiving acknowledgement (ACK) information for the data by the second device.

75. The method of any one of claims 40 to 74, wherein the second information comprises second duration information, the second duration information is related to a time length of the channel resource allocated by the first device, and the second duration information is used to instruct a fourth device to set a network allocation vector (NAV).

76. The method of any one of claims 40 to 75, wherein the first information comprises first duration information, the first duration information is related to N time units associated with the first information, and the first duration information is used to instruct a fifth device to set a NAV.

77. The method of any one of claims 40 to 76, further comprising:
receiving, by the second device, first periodic information sent by the first device in a process of establishing an association with the first device; or
receiving, by the second device, the first periodic information broadcast by the first device, wherein the first periodic information is used to indicate a period size for sending the first information .

78. The method of any one of claims 40 to 77, wherein the device identifiers are association identifiers (AIDs) or slice AIDs.

79. A first device, comprising:
a first communication module, configured to send first information, wherein the first information is used to indicate N device identifiers, so that a second device that receives the first information sends request information for a channel resource in a case that the N device identifiers comprise a device identifier of the second device, and N is an integer greater than or equal to 2.

80. The first device of claim 79, wherein the first device is an access point (AP) or a station (STA), and the second device is a zero-power terminal associated with the first device.

81. The first device of claim 79 or 80, wherein the channel resource is transmission opportunity(s) (TXOP(s)) obtained by the first device through channel access.

82. The first device of any one of claims 79 to 81, wherein the first information comprises K pieces of identifier indication information respectively corresponding to K device identifiers, the K pieces of identifier indication information are used to indicate the N device identifiers among the K device identifiers, and K is an integer greater than or equal to N.

83. The first device of claim 82, wherein the first information comprises a first bitmap, the K pieces of identifier indication information are K bits in the first bitmap, and the N device identifiers comprise device identifiers corresponding to bits whose values are a first value among the K bits.

84. The first device of any of claims 79 to 83, wherein the first communication module is further configured to:
periodically send the first information.

85. The first device of any one of claims 79 to 84, wherein the first communication module is further configured to:
in the case that the N device identifiers comprise the device identifier of the second device, receive the request information from the second device on a first time unit, wherein the first time unit is related to the N device identifiers.

86. The first device of claim 85, wherein the first time unit is determined based on a relative position of the device identifier of the second device among the N device identifiers.

87. The first device of claim 86, wherein the first time unit is a slot.

88. The first device of claim 87, wherein a length of the slot is predefined, or is configured.

89. The first device of any one of claims 85 to 88, wherein the first device further comprises a first processing module, configured to:
in a case that the request information is received, determine that the second device requests the channel resource.

90. The first device of any one of claims 85 to 89, wherein the first device further comprises a second processing module, configured to:
in a case that the request information is not received, determine that the second device does not request the channel resource.

91. The first device of any one of claims 85 to 88, wherein the first device further comprises a third processing module, configured to:
in a case that the received request information comprises confirmation information, determine that the second device requests the channel resource.

92. The first device of any one of claims 85 to 88 and 91, wherein the first device further comprises a fourth processing module, configured to:
in a case that the received request information comprises negation information, determine that the second device does not request the channel resource.

93. The first device of any one of claims 85 to 92, wherein the request information comprises at least one of:
a time length of the requested channel resource;
frequency domain bandwidth;
a number of channel(s);
position(s) of the channel(s); or
a communication type.

94. The first device of any one of claims 79 to 93, wherein the first information is an i-th polling frame of L polling frames that are sequentially sent; and
the L polling frames respectively correspond to L device identifier sets, and the i-th polling frame is used to indicate the N device identifiers in a device identifier set corresponding to the i-th polling frame, L is an integer greater than or equal to 2, and i is a positive integer less than or equal to L.

95. The first device of claim 94, wherein the i-th polling frame is further configured to indicate index information of the device identifier set corresponding to the i-th polling frame.

96. The first device of claim 94 or 95, wherein the first communication module is further configured to:
send, to the second device, index information of a device identifier set corresponding to the second device in a process of establishing an association with the second device.

97. The first device of claim 94, wherein the i-th polling frame is further used to indicate identifier offset information, and the identifier offset information is used to determine a device identifier starting point of the device identifier set corresponding to the i-th polling frame.

98. The first device of claim 97, wherein the device identifier starting point comprises a slice identifier starting point.

99. The first device of any of claims 79 to 98, wherein the first communication module is further configured to:
send second information, wherein the second information comprises M pieces of grant information respectively corresponding to M devices, each of the M pieces of grant information is used to indicate whether a channel resource is allocated for a device corresponding to the grant information, and M is an integer greater than or equal to 1.

100. The first device of claim 99, wherein the second information is determined based on at least one piece of received request information.

101. The first device of claim 99 or 100, wherein the M devices comprise devices requesting channel resources.

102. The first device of claim 99 or 100, wherein the M devices comprise N devices.

103. The first device of claim 99 or 100, wherein the M devices comprise devices corresponding to each of device identifier sets corresponding to the first information.

104. The first device of any one of claims 99 to 103, wherein at least one of a time length of the allocated channel resource, an allocated frequency domain bandwidth, a number of allocated channel(s), position(s) of the allocated channel(s), or an allocated communication type is predefined.

105. The first device of any one of claims 99 to 103, wherein each piece of grant information is further used to indicate at least one of:
a time length of the allocated channel resource;
frequency domain bandwidth;
a number of channel(s);
position(s) of the channel(s); or
communication type.

106. The first device of any one of claims 99 to 104, wherein the second information comprises a second bitmap, and the M pieces of grant information are M bits in the second bitmap.

107. The first device of claim 106, wherein in a case that a value of a first bit of the M bits is a second value, the first bit is used to indicate that a channel resource is allocated for a device corresponding to the first bit.

108. The first device of any one of claims 99 to 107, wherein the second information is a j-th grant frame of X grant frames that are sequentially sent; and
the X grant frames respectively correspond to X device identifier sets, the j-th grant frame comprises the M pieces of grant information respectively corresponding to M device identifiers in a device identifier set corresponding to the j-th grant frame, X is an integer greater than or equal to 2, and j is a positive integer less than or equal to X.

109. The first device of claim 108, wherein the j-th grant frame is further used to indicate index information of the device identifier set corresponding to the j-th grant frame.

110. The first device of claim 108, wherein the j-th grant frame is further used to indicate identifier offset information, and the identifier offset information is used to determine a device identifier starting point of the device identifier set.

111. The first device of claim 110, wherein the device identifier starting point comprises a slice identifier starting point.

112. The first device of any one of claims 99 to 111, wherein in a case that the second information indicates that the channel resource is allocated for the second device, the channel resource is used for information transmission between the second device and the first device, or information transmission between the second device and a third device.

113. The first device of claim 112, wherein the information transmission comprises sending data by the second device and receiving acknowledgement (ACK) information for the data by the second device.

114. The first device of any one of claims 99 to 113, wherein the second information comprises second duration information, the second duration information is related to a time length of the channel resource allocated by the first device, and the second duration information is used to instruct a fourth device to set a network allocation vector (NAV).

115. The first device of any one of claims 79 to 114, wherein the first information comprises first duration information, the first duration information is related to N time units associated with the first information, and the first duration information is used to instruct a fifth device to set a NAV.

116. The first device of any one of claims 79 to 115, wherein the first communication module is further configured to:
send first periodic information to the second device in a process of establishing an association with the second device; or
broadcast the first periodic information, wherein the first periodic information is used to indicate a period size for sending the first information.

117. The first device of any one of claims 79 to 116, wherein the device identifiers are association identifiers (AIDs) or slice AIDs.

118. A second device, comprising:
a second communication module, configured to receive first information sent by a first device, wherein the first information is used to indicate N device identifiers; and send request information for a channel resource in a case that the N device identifiers comprise a device identifier of the second device, wherein N is an integer greater than or equal to 2.

119. The second device of claim 118, wherein the first device is an access point (AP) or a station (STA), and the second device is a zero-power terminal associated with the first device.

120. The second device of claim 118 or 119, wherein the channel resource is transmission opportunity(s) (TXOP(s)) obtained by the first device through channel access.

121. The second device of any one of claims 118 to 120, wherein the first information comprises K pieces of identifier indication information respectively corresponding to K device identifiers, the K pieces of identifier indication information are used to indicate the N device identifiers among the K device identifiers, and K is an integer greater than or equal to N.

122. The second device of claim 121, wherein the first information comprises a first bitmap, the K pieces of identifier indication information are K bits in the first bitmap, and the N device identifiers comprise device identifiers corresponding to bits whose values are a first value among the K bits.

123. The second device of any of claims 118 to 122, wherein the second communication module is further configured to:
periodically receive the first information.

124. The second device of any one of claims 118 to 123, wherein the request information is sent on a first time unit, and the first time unit is related to the N device identifiers.

125. The second device of claim 124, wherein the first time unit is determined based on a relative position of the device identifier of the second device among the N device identifiers.

126. The second device of claim 125, wherein the first time unit is a slot.

127. The second device of claim 125, wherein a length of the slot is predefined, or configured by the first device.

128. The second device of any one of claims 118 to 127, wherein the second communication module is further to:
in the case that the N device identifiers comprise the device identifier of the second device, if the second channel resource is requested, send the request information.

129. The second device of any one of claims 118 to 128, wherein the second communication module is further configured to:
in the case that the N device identifiers comprise the device identifier of the second device, if the second channel resource is not requested, not send the request information.

130. The second device of any one of claims 118 to 128, wherein in a case that the second channel resource is requested, the request information comprises confirmation information.

131. The second device of any one of claims 118 to 128 and 130, wherein in a case that the second channel resource is not requested, the request information comprises negation information.

132. The second device of any one of claims 118 to 131, wherein the request information comprises at least one of:
a time length of the requested channel resource;
frequency domain bandwidth;
a number of channel(s);
position(s) of the channel(s); or
a communication type.

133. The second device of any one of claims 118 to 132, wherein the first information is an i-th polling frame of L polling frames sequentially sent by the first device; and
the L polling frames respectively correspond to L device identifier sets, and the i-th polling frame is used to indicate the N device identifiers in a device identifier set corresponding to the i-th polling frame, L is an integer greater than or equal to 2, and i is a positive integer less than or equal to L.

134. The second device of claim 133, wherein the i-th polling frame is further used to indicate index information of the device identifier set corresponding to the i-th polling frame, and
the second device further comprises a fifth processing module, configured to:
determine, based on index information of a device identifier set corresponding to the second device, a polling frame, related to the second device, among the L polling frames.

135. The second device of claim 133 or 134, wherein the second communication module is further configured to:
receive index information, of a device identifier set corresponding to the second device, sent by the first device in a process of establishing an association with the first device.

136. The second device of claim 135, wherein the i-th polling frame is further used to indicate identifier offset information, and the identifier offset information is used to determine a device identifier starting point of the device identifier set corresponding to the i-th polling frame, and
the fifth processing module is further configured to:
determine, based on the device identifier starting point of the device identifier set corresponding to the i-th polling frame, whether the i-th polling frame is related to the second device.

137. The second device of claim 136, wherein the device identifier starting point comprises a slice identifier starting point.

138. The second device of any one of claims 118 to 137, wherein the second communication module is further configured to:
receive second information, wherein the second information comprises M pieces of grant information respectively corresponding to M devices, each of the M pieces of grant information is used to indicate whether a channel resource is allocated for a device corresponding to the grant information, and M is an integer greater than or equal to 1.

139. The second device of claim 138, wherein the second information is determined based on at least one piece of request information received by the first device.

140. The second device of claim 138 or 139, wherein the M devices comprise devices requesting channel resources.

141. The second device of claim 138 or 139, wherein the M devices comprise N devices.

142. The second device of claim 138 or 139, wherein the M devices comprise devices corresponding to each of device identifier sets corresponding to the first information.

143. The second device of any one of claims 138 to 142, wherein at least one of a time length of the channel resource, a frequency domain bandwidth, a number of channel(s), position(s) of the channel(s), or a communication type, allocated by the first device, is predefined.

144. The second device of any one of claims 138 to 142, wherein each piece of grant information is further used to indicate at least one of:
a time length of the allocated channel resource;
frequency domain bandwidth;
a number of channel(s);
position(s) of the channel(s); or
a communication type.

145. The second device of any one of claims 138 to 143, wherein the second information comprises a second bitmap, and the M pieces of grant information are M bits in the second bitmap.

146. The second device of claim 145, wherein in a case that a value of a first bit of the M bits is a second value, the first bit is used to indicate that a channel resource is allocated for a device corresponding to the first bit.

147. The second device of any one of claims 138 to 146, wherein the second information is a j-th grant frame of X grant frames sequentially sent by the first device; and
the X grant frames respectively correspond to X device identifier sets, the j-th grant frame comprises the M pieces of grant information respectively corresponding to M device identifiers in a device identifier set corresponding to the j-th grant frame, X is an integer greater than or equal to 2, and j is a positive integer less than or equal to X.

148. The second device of claim 147, wherein the j-th grant frame is further used to indicate index information of the device identifier set corresponding to the j-th grant frame.

149. The second device of claim 147, wherein the j-th grant frame is further used to indicate identifier offset information, and the identifier offset information is used to determine a device identifier starting point of the device identifier set.

150. The second device of claim 149, wherein the device identifier starting point comprises a slice identifier starting point.

151. The second device of any one of claims 138 to 150, wherein the second communication module is further configured to:
in a case that the second information indicates that the channel resource is allocated, perform information transmission between the second device and the first device, or information transmission between the second device and a third device by using the channel resource.

152. The second device of claim 151, wherein the information transmission comprises sending data and receiving acknowledgement (ACK) information for the data.

153. The second device of any one of claims 118 to 152, wherein the second information comprises second duration information, the second duration information is related to a time length of the channel resource allocated by the first device, and the second duration information is used to instruct a fourth device to set a network allocation vector (NAV).

154. The second device of any one of claims 118 to 153, wherein the first information comprises first duration information, the first duration information is related to N time units associated with the first information, and the first duration information is used to instruct a fifth device to set a NAV.

155. The second device of any of claims 118 to 154, wherein the second communication module is further configured to:
receive first periodic information sent by the first device in a process of establishing an association with the first device; or
receive the first periodic information broadcast by the first device, wherein the first periodic information is used to indicate a period size for sending the first information.

156. The second device of any one of claims 118 to 155, wherein the device identifiers are association identifiers (AIDs) or slice AIDs.

157. A first device, comprising: a processor and memory, wherein the memory is configured to store a computer program and a processor is configured to invoke and execute the computer program stored in the memory to cause the first device to perform the method of any one of claims 1 to 39.

158. A second device, comprising: a processor and memory, wherein the memory is configured to store a computer program and a processor is configured to invoke and execute the computer program stored in the memory to cause the second device to perform the method of any one of claims 40 to 78.

159. A chip comprising: a processor for invoking and executing a computer program from a memory to cause a device on which the chip is mounted to perform the method of any one of claims 1 to 78.

160. A computer readable storage medium for storing a computer program that, when executed by a device, causes the device to perform the method of any one of claims 1 to 78.

161. A computer program product comprising computer program instructions that cause a computer to perform the method of any one of claims 1 to 78.

162. A computer program that causes a computer to perform the method of any one of claims 1 to 78.

163. A communication system, comprising:
A first device, configured to perform the method of any one of claims 1 to 39; and
a second device, configured to perform the method of any one of claims 40 to 78.
